# EUROPEAN PATENT APPLICATION

(11) **EP 2 400 520 A1**
(43) Date of publication of application: **28.12.2011**
(21) Application number: 10758287.6
(22) Date of filing: 31.03.2010
(51) Int. Cl.: H01H 13/02, H01H 13/702

(54) **SHEET SWITCH MODULE AND METHOD OF MANUFACTURING SAME**

(30) Priority: 31.03.2009 JP 2009085659; 28.07.2009 JP 2009175287
(71) Applicant: Fujikura, Ltd., Tokyo 135-8512 (JP)
(72) Inventor: SATO, Shimpei, Sakura-shi Chiba 285-8550 (JP); NISHIWAKI, Kenji, Sakura-shi Chiba 285-8550 (JP); INADA, Tomosada, Sakura-shi Chiba 285-8550 (JP); HIRATA, Katsunori, Sakura-shi Chiba 285-8550 (JP)
(74) Representative: Boire, Philippe Maxime Charles
(86) International application number: PCT/JP2010/002382
(87) International publication number: WO 2010/113508

(57) **Abstract**

A sheet switch module (10) of the present invention includes: a light source (11); a light guide (12) that guides light from the light source (11); a sheet switch (20) disposed on the back side of the light guide (12) in a thickness direction of the light guide (12); and a groove (155) formed in the thickness direction of the light guide (12) in at least one of a surface and the back of the light guide (12).

## Description

### TECHNICAL FIELD

The present invention relates to a sheet switch module and a method of manufacturing the same which are used in illumination of operation buttons and key buttons of cellular phones, personal digital assistants (PDAs), personal computers, or the like.

Priorities are claimed on Japanese Patent Application Nos. 2009-085659, filed on March 31, 2009, and 2009-175287, filed on July 28, 2009, the contents of which are incorporated herein by reference.

### BACKGROUND ART

When operation buttons and key buttons of cellular phones, PDAs, personal computers, or the like are operated in a dark place, the buttons or keys are illuminated in order to make the position of the buttons or keys visible.

Conventionally, planar light-emitting devices are used in order to brightly illuminate key buttons of a cellular phone, and planar light-emitting devices of the side light-emitting type are widely used as an aspect of the planar light-emitting devices.

The planar light-emitting device of the side light-emitting type is constituted by a light guide film (light guide plate) disposed on the back side of a liquid crystal panel which is a display section, and a light source disposed on the end side of the light guide film.

In addition, as a light source applied to the planar light-emitting device, an LED (Light Emitting Diode), a cold-cathode tube or the like can be used.

As an example of such an illumination device, a push-button switch type illumination device is disclosed (refer to, for example, Patent Document 1).

The push-button switch type illumination device is constituted by operation keys, a switching element, disposed below these operation keys, that perform switching by the press of the operation key, and a flexible light guide plate disposed between the operation key and the switching element.

The flexible light guide plate projects light incident from a light source disposed on the lateral side toward the lower surface of the operation key to illuminate the operation key from the lower side.

In recent years, it has been desired to illuminate the operation key so as to selectively light up only a specific operation key or not to selectively light up only a specific operation key.

As a method for realizing this, a method of providing a light shielding portion, made of a non-light-transmissive resin, in a light guide is disclosed (refer to, for example, Patent Document 2).

That is, in the above-described method, the light shielding portion is provided in the boundary of each region of the light guide by dividing the light guide into multiple regions, providing a slit in the portion serving as the boundary of each region, and filling a non-light-transmissive resin in the inside of the slit.

In addition, a push button illumination device is disclosed in which the upper portion and the lower portion of the push button can be respectively illuminated using only one light guiding body (refer to, for example, Patent Document 3).

Such an illumination device includes a light shielding rib having a notch portion and a light guiding body attached to the light shielding rib.

Among them, the light guiding body includes a first light guiding portion and a second light guiding portion that illuminate the upper portion and the lower portion, respectively, of the push button, and the first and second light guiding portions are integrated through a crank-shaped connection.

The light guiding body is attached to the light shielding rib by fitting the crank-shaped connection to the notch portion of the light shielding rib.

### PRIOR ART DOCUMENTS

### PATENT DOCUMENTS

[Patent Document 1] Japanese Unexamined Patent Application, First Publication No.2001-167655
[Patent Document 2] Japanese Unexamined Patent Application, First Publication No. 2008-41431
[Patent Document 3] Japanese Unexamined Utility Model Application, First Publication No. H5-53070

### DISCLOSURE OF INVENTION

### PROBLEMS TO BE SOLVED BY THE INVENTION

As shown in paragraphs 0034 to 0035 and FIG. 5 of Patent Document 2, after the light guide is produced by a spin coating method, the slit is produced in this light guide by etching.

Thereafter, a non-light-transmissive liquid resin is filled into this slit, and the light shielding portion is formed by curing the resin.

Therefore, according to the method of Patent Document 2, there has been a problem in that it takes too much time and labor for production.

In addition, as shown in paragraphs 0036 to 0037 and FIG. 6 of Patent Document 2, even when an insert molding technique is applied, there has been a problem in that since a hard black resin is interposed between molds and a light guide material is poured from both sides, it takes too much time and labor for production.

In addition, the method disclosed in Patent Document 2 is a method of providing a light shielding body in the light guide on the operation key side, and the light shielding body has a thickness of 0.3 to 2 mm and the thickness is very thick.

Furthermore, as shown in FIGS. 5 and 6 of Patent Document 2, the light shielding body and the light guide which are integrally formed are completely adhered to each other.

Therefore, when the material constituting the light shielding body and the material constituting the light guide are different from each other, there is a possibility that the light shielding body may be peeled off by a change in the environmental temperature due to the difference of the linear expansion coefficients of these materials.

In addition, it is considered that a light shielding member is provided in the push-button switch type illumination device of Patent Document 1 by applying the technique of Patent Document 3.

In this case, as shown in FIG. 4 of Patent Document 3, since the height of the light shielding rib is smaller than that of the light guiding body, the light shielding property is insufficient.

Therefore, the push button and an escutcheon (base of the attachment portion) having a height larger than that of the light guiding body have a function of the light shielding.

That is, the light shielding body having a height larger than that of the light guiding body is provided.

However, the field of application of the technique of Patent Document 3 is a car audio, and it is often the case that there is enough space.

On the other hand, in the field of a cellular phone, it is desired to reduce the thickness thereof insofar as possible, and it is not considered that a member thicker than the light guide plate is provided.

Therefore, conventionally, the method disclosed in Patent Document 2 has been adopted.

In addition, the light shielding rib shown in Patent Document 3 is formed integrally with an escutcheon or the like.

When such a technique is applied to a cellular phone, the light shielding body is formed integrally with a switching element disposed below the light guide.

For this reason, it is necessary to form a very specific shape, and thus the manufacturing costs are increased.

The present invention is contrived in view of such circumstances, and an body thereof is to provide a sheet switch module and a method of manufacturing the same which are capable of selectively lighting up only a specific operation key or not selectively lighting up only a specific operation key, using a simple structure.

### MEANS FOR SOLVING THE PROBLEMS

The present invention for solving the above-mentioned problems adopts the following configurations.
(1) The sheet switch module according to the present invention includes: a light source; a light guide that guides light from the light source; a sheet switch disposed on the back side of the light guide in a thickness direction of the light guide; and a groove formed in the thickness direction of the light guide in at least one of a surface and the back of the light guide.
(2) It is preferable that in the sheet switch module, a colored layer is formed on a surface of the groove.
(3) It is preferable that an adhesive material is formed in a position corresponding to the groove, on the back of the light guide.
(4) It is preferable that a light shielding sheet that covers the groove is formed on the surface of the light guide.
(5) It is preferable that a groove formed in the thickness direction is formed on the surface and the back of the light guide, and a colored layer is formed on the surface of at least one groove.
(6) It is preferable that the light guide includes a first light guide region and a second light guide region, and the groove is formed between the first light guide region and the second light guide region.
(7) It is preferable that the groove has a semi-circular or trapezoidal cross-sectional shape in the thickness direction of the light guide.
(8) The groove penetrates through in the thickness direction of the light guide.
(9) A width of the groove in the surface of the light guide is larger than a width of the groove in the back of the light guide.
(10) The light guide includes a first end-face on which light from the light source is incident, and a second end-face which is a surface opposite to the first end-face, and the sheet switch module further comprises a second light source that causes light to be incident on the second end-face of the light guide.
(11) A depth of the groove in the thickness direction is 70% or more of a thickness of the light guide in the thickness direction.
(12) Uneven portion is formed on the surface or the back of the light guide.
(13) A method of manufacturing a sheet switch module according to an aspect of the present invention includes: a colored layer forming step of forming a colored layer on at least one surface of a light guide; and a groove forming step of using a mold having at least one protruding portion which protrudes in a thickness direction to hot-press the mold from both sides of the light guide by causing positions of the colored layer and the protruding portion to correspond to each other, to simultaneously form a groove and a colored layer on at least one surface of the light guide.

### EFFECTS OF THE INVENTION

According to the present invention, since the groove is formed on the surface and/or the back of the light guide, the light propagating through the inside of the light guide goes through the groove, whereby the amount of the propagating light is reduced.

Therefore, it is possible to add gradation to the brightness of the light guide before and after the groove in the direction of light travel.

Furthermore, the depth and the like of the groove are adjusted, thereby allowing the light propagating through the inside of the light guide to be blocked by this groove.

Because of this, it is possible to light up only a portion of the light guide.

### BRIEF DESCRIPTION OF THE DRAWINGS

FIG. 1A is a schematic diagram showing a sheet switch module according to a first embodiment of the present invention.
FIG. 1B is a cross-sectional view taken along the A-A line of FIG. 1A.
FIG. 2 is a cross-sectional view showing an example of a sheet switch constituting the sheet switch module shown in FIG. 1A.
FIG. 3A is a schematic diagram showing the sheet switch module according to a second embodiment of the present invention.
FIG. 3B is a cross-sectional view taken along the B-B line of FIG. 1A.
FIG. 4A is a schematic diagram showing the sheet switch module according to a third embodiment of the present invention.
FIG. 4B is a cross-sectional view taken along the C-C line of FIG. 4A.
FIG. 5A is a schematic diagram showing the sheet switch module according to a fourth embodiment of the present invention.
FIG. 5B is a cross-sectional view taken along the D-D line of FIG. 5A.
FIG. 6 is a schematic cross-sectional view showing the sheet switch module according to a fifth embodiment of the present invention.
FIG. 7A is a schematic diagram showing the sheet switch module according to a sixth embodiment of the present invention.
FIG. 7B is a cross-sectional view taken along the E-E line of FIG. 7A.
FIG. 8 is a graph for explaining a relationship between the ratio of the depth of a groove to the thickness of a light guide 12 and the light-shielding ratio.
FIG. 9 is a graph for explaining a relationship between the groove width and the light-shielding ratio in the sheet switch module.
FIG. 10A is a schematic diagram showing the sheet switch module according to a seventh embodiment of the present invention.
FIG. 10B is a cross-sectional view taken along the F-F line of FIG. 10A.
FIG. 11 is a graph for explaining a relationship between the distance of a slit, the end-face angle of the slit, and the light-shielding ratio in the sheet switch module.
FIG. 12A is a schematic diagram showing the sheet switch module according to an eighth embodiment of the present invention.
FIG. 12B is a cross-sectional view taken along the G-G line of FIG. 12A.
FIG. 13A is a schematic diagram showing the sheet switch module according to a ninth embodiment of the present invention.
FIG. 13B is a cross-sectional view taken along the M-M line of FIG. 13A.
FIG. 14 is a schematic cross-sectional view showing a method of manufacturing the sheet switch module of the present invention.
FIG. 15 is a schematic cross-sectional view showing the method of manufacturing the sheet switch module of the present invention.
FIG. 16 is a schematic cross-sectional view showing the method of manufacturing the sheet switch module of the present invention.
FIG. 17 is a schematic cross-sectional view showing the sheet switch module of the present invention.
FIG. 18 is a schematic cross-sectional view showing the method of manufacturing the sheet switch module of the present invention.
FIG. 19 is a schematic cross-sectional view showing the method of manufacturing the sheet switch module of the present invention.
FIG. 20 is a schematic cross-sectional view showing the sheet switch module according to a tenth embodiment of the present invention.

### EMBODIMENTS FOR CARRYING OUT THE INVENTION

Hereinafter, embodiments of a sheet switch module according to the present invention will be described in detail with reference to the drawings.

In the description of the present invention, the surface (upper surface, or one surface) is indicative of a surface directed to the +Z direction, and the back (lower surface, or the other surface) is indicative of a surface directed to the -Z direction.

The first end-face (one end-face) is indicative of an end-face directed to the-Y direction, and the second end-face (the other end-face) is indicative of an end-face directed to the +Y direction.

However, the surface and the back, or the first end-face and the second end-face are defined for the convenience of the illustration and the description, and the present invention is not limited thereto.

In addition, the embodiments are specifically described in order to better understand the gist of the present invention, but the present invention is not limited thereto unless particularly specified.

### <First Embodiment>

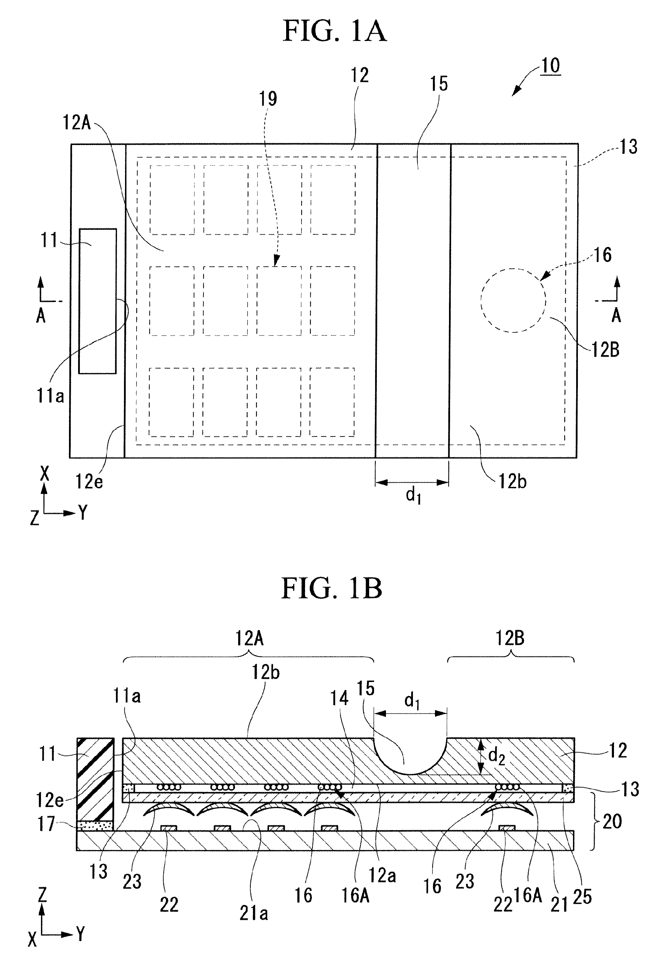

FIG. 1A is a schematic diagram (plan view) showing a sheet switch module according to a first embodiment of the present invention.
FIG. 1B is a cross-sectional view taken along the A-A line of FIG. 1A.

As shown in FIGS. 1A and 1B, a sheet switch module 10 according to the present embodiment includes a light source 11, a sheet-shaped light guide 12, and a sheet switch 20 disposed on the back (lower surface, or one surface) 12a side of the light guide 12.

The light guide 12 is formed in a rectangular shape when seen in a plan view (X-Y plane) of FIG. 1A.

Additionally, as shown in FIGS. 1A and 1B, the light guide 12 is disposed close to an emission surface 11a of the light source 11.

That is, as shown in FIG. 1B, the light source 11 and the light guide 12 are disposed along the +Y direction.

As the light source 11, a light-emitting element such as a light-emitting diode (LED) and a light-emitting body such as a cold-cathode tube are used.

When the light source 11 is made of an LED, it is configured such that a light-emitting element chip is embedded in the inside of a box-shaped case, and light emitted by the light-emitting element chip can be emitted from the emission surface 11a which is the lateral side of a case of the light source 11.

In addition, as shown in FIG. 1B, the light source 11 is provided on a board 21 of the sheet switch 20 by a solder 17.

That is, the light source 11 is provided on the surface (upper surface, or one surface) 21a of the board 21 in the first end (-Y direction side) of the board 21.

However, the light source 11 can also be provided on the board 21 by an adhesive or a mechanical connection method without being limited thereto.

In the present embodiment, as shown in FIG. 1B, the light guide 12 includes a first light guide region 12A and a second light guide region 12B.

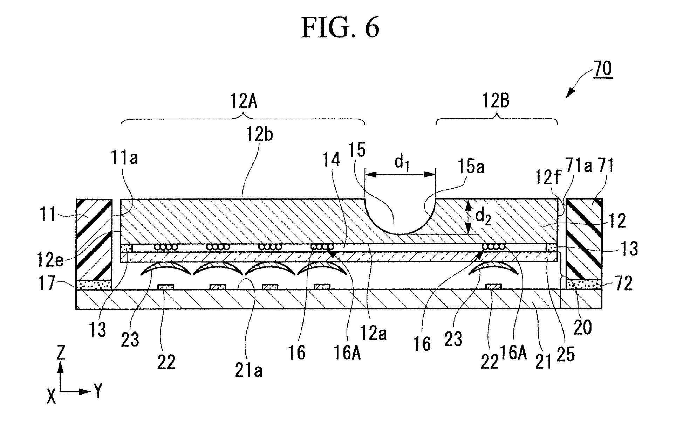

The light guide 12 includes a back 12a directed to the sheet switch 20 side, a surface (upper surface, or the other surface) 12b which is an opposite surface of the back 12a, a first end-face (one end-face) 12e directed to the light source 11 side, and a second end-face 12f (see FIG. 6) which is an opposite surface of the first end-face 12e.

As shown in FIG. 1B, the light source 11 is disposed close to the first end-face 12e of the first light guide region 12A of the light guide 12.

Light emitted from the light source 11 is incident on the first light guide region 12A.

The sheet switch 20 adheres to the back 12a of the light guide 12 with a frame-shaped adhesive material 13 interposed therebetween.

As shown in FIG. 1A, the adhesive material 13 is provided in the periphery of the back 12a of the light guide 12.

That is, the adhesive material 13 is provided in a rectangle shape along the outer circumference of the light guide 12.

Because of this, a gap 14 is provided between the light guide 12 and the sheet switch 20.

That is, the light guide 12 and the sheet switch 20 are not in contact with each other, and are disposed facing each other at a distance corresponding to the thickness of the adhesive material 13.

The thickness of the gap 14 provided between the light guide 12 and the sheet switch 20 is not particularly limited.

That is, in the state where the sheet switch module 10 is used, the distance between the light guide 12 and the sheet switch 20 is not particularly limited as long as the light guide 12 and the sheet switch 20 are not in contact with each other.

From the viewpoint of the reduction in the thickness of the sheet switch module 10, the above-mentioned distance is preferably 0.01 to 0.05 mm.

As shown in FIG. 1B, a groove 15 opening toward the +Z direction is provided on the back 12a of the light guide 12.

The groove 15 extends in the thickness direction (Z direction) perpendicular to the longitudinal direction (Y direction) of the light guide 12.

That is, the groove 15 is concaved in the -Z direction (thickness direction) with respect to the surface 12b of the light guide 12.

In addition, in the present embodiment, the groove 15 forms a semi-circular cross-sectional shape in the Y direction (longitudinal direction) of the light guide 12.

The light guide 12 is divided into two regions using the groove 15 as a boundary.

That is, the light guide 12 is divided into the first light guide region 12A and the second light guide region 12B with the groove 15 interposed therebetween.

Hereinafter, description will be made in which the width of the groove 15 in the Y direction is represented as d₁, and the depth of the groove 15 in the Z direction is represented as d₂.

The width d₁, the depth d₂, and the curvature of the groove 15 are not particularly limited.

In the sheet switch module 10, the light emitted from the light source 11 is incident on the first end-face 12e of the light guide 12.

The incident light propagates through the inside of the light guide 12, a portion of the incident light is emitted from the groove 15 to the outside, and the remaining incident light is reflected in the inner surface 15a (interface between the groove 15 and the external space) of the groove 15 and propagates from the first light guide region 12A to the second light guide region 12B.

Alternatively, the entirety of the incident light is emitted from the groove 15 to the outside.

Therefore, it is possible to appropriately adjust the width d₁, the depth d₂ or the curvature of the groove 15 in accordance with the amount of the light emitted from the groove 15 to the outside or the light emitting angle.

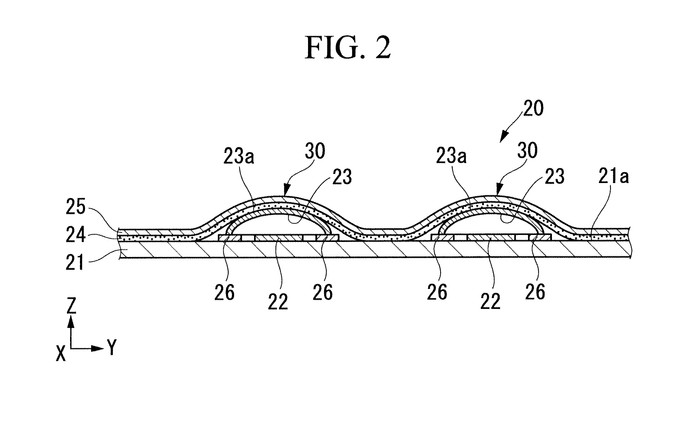

Hereinafter, a structure of the sheet switch will be described with reference to FIGS. 1B and 2.

The sheet switch 20 includes the board 21, a plurality of contact portions 22 provided on the surface (upper surface, or one surface) 21a of the board 21, contact portions 26 provided in the periphery of the contact portions 22, dome-shaped metal plates 23 that cover the contact portions 22 and the contact portions 26, and a press sheet 25 that covers the metal plates 23.

In other words, as shown in FIG. 2, one pressure-sensitive switch element 30 is constituted by the contact portion 22, the contact portion 26, the metal plate 23, and the press sheet 25.

Switch elements 30 are provided on the surface 21a of the board 21, to form the sheet switch 20.

In addition, the press sheet 25 covers the metal plate 23 with the adhesive layer 24, which is formed on the surface facing the surface 21a of the board 21, interposed therebetween, and maintains the position of the metal plate 23.

As shown in FIG. 1B, light extraction portions 16 are formed in a predetermined position on the back 12a of the light guide 12.

The sheet switch 20 is disposed on the back 12a side of the light guide 12, and the back 12a of the light guide 12 forms a lower surface (back) of the sheet switch module 10.

Further, light extraction portions 16 are aligned with respect to pressure-sensitive switch elements 30 constituting the sheet switch 20 when seen in a plan view (X-Y plane).

That is, the light extraction portions 16 are disposed so as to face the metal plates 23 of each of the switch elements 30.

A plurality of contact portions 22 is provided at a predetermined distance on the surface (surface facing the light guide 12) 21a of the board 21.

Each of the dome-shaped metal plates 23 covers each of the contact portions 22 so that each of the contact portions 22 is located substantially in the center.

The press sheet 25 covers the dome-shaped metal plates 23 with the adhesive layer 24 interposed therebetween.

In more detail, as shown in FIG. 2, contact portions 22 made of a conductive material are provided at a predetermined distance on the surface 21a of the board 21 formed of a printed circuit board such as a PCB (Printed Circuit Board) or an FPC (Flexible Printed Circuit).

The annular contact portions 26 made of a conductive material are provided in the periphery of the contact portions 22.

The dome-shaped metal plates 23 that cover the contact portions 22 and the contact portions 26 are provided.

The electrical connection and disconnection between the contact portion 22 and the contact portion 26 are switched by the metal plate 23.

This predetermined distance can be set in accordance with the placement position and the size of key buttons to be illuminated.

In addition, the contact portions 22 and the annular contact portions 26 are made of conductive materials, and can be formed of the same or different conductive material without being particularly limited as long as the materials are conductible.

The metal plate 23 has a flexibility to be attachable and detachable to and from the contact portion 22, and forms a concave bowl-shaped metal dome on the side opposite to the surface 21a of the board 21.

That is, the metal plate 23 is an arch-shaped flexible plate protruding in the +Z direction when seen in a cross-sectional view of FIG. 2.

When external force is applied to the upper surface 23a of the metal plate 23, the metal plate 23 is curved in the -Z direction, and when the external force is eliminated, the metal plate can be restored to the original state by its flexibility.

Therefore, when an operator presses the central portion of the upper surface (surface) 23a of the metal plate 23 using an operating tool such as the fingers, the central portion of the upper surface 23a of the metal plate 23 is deformed so as to be curved toward the surface 21a side of the board 21.

Among them, the upper surface 23a of the metal plate 23 is a surface on the side opposite to the surface facing the surface 21a of the board 21, that is, a surface directed to the +Z direction.

The lower surface of the metal plate 23 abuts on the contact portion 22 due to the curvature of the metal plate 23, thereby allowing the contact portion 22 and the contact portion 26 to be electrically connected to each other.

The lower surface of the metal plate 23 is a surface facing the surface 21a of the board 21, that is, a surface directed to the -Z direction.

In addition, when the operator stops above pressing operation, the metal plate 23 is restored to its original state by its flexibility, and the metal plate 23 and the contact portion 22 are converted from the contact state to the non-contact state.

That is, the contact portion 22 and the contact portion 26 are electrically unconnected to each other.

In this manner, it is possible to switch between the electrical connection and disconnection between the contact portion 22 and the contact portion 26 by the contact and non-contact of the metal plate 23 with the contact portion 22.

The light guide 12 is made of a sheet-shaped resin, and has a rectangular shape, for example, when seen in a plan view (X-Y plane).

The resin constituting the light guide 12 is not particularly limited as long as it is a light-transmissive resin and an elastically deformable resin.

For example, one type of resin selected from a group consisting of a polyurethane-based resin, a polycarbonate-based resin, a silicone-based resin, a polystyrene-based resin, a polyimide-based resin, elastomer of polymethylmethacrylate (PMMA), and urethane acrylate is used.

Among these resins, in order to constantly maintain the width of a gap 14 provided between the light guide 12 and the sheet switch 20, that is, in order for the light guide 12 and the sheet switch 20 not to be in contact with each other, a resin having an adequate rigidity is preferable, and specifically, a polycarbonate-based resin is preferable.

In addition, the polycarbonate-based resin is suitable because the transmittance of the light is high even when its thickness is small.

In addition, since a polyurethane-based resin or a silicon resin has an elasticity, the upper surface of the light guide 12 made of these resins is scarcely damaged, and the sense of touch when the light extraction portion 16 is pressed is more comfortable.

The thickness of the light guide 12 is not particularly limited as long as the light guide can be curved in the Z direction when it has a high transmittance for the emission light of the light source 11 and is pressed in the -Z direction.

That is, when the light guide 12 is not pressed, the light guide 12 and the sheet switch 20 are not in contact with each other, and when an operator presses the light guide 12 using an operating tool such as a fingertip or a pen, the light guide 12 is curved in the -Z direction and deformed by this press.

The metal plate 23 is curved downward and deformed by the curvature deformation of the light guide 12.

Because of this, the central portion of the metal plate 23 abuts on the contact portion 22, thereby allowing the contact portion 22 to be electrically connected to the contact portion 26.

On the other hand, when the light guide 12 is not pressed, the thickness of the light guide 12 is not particularly limited as long as the width of the gap 14 provided between the light guide 12 and the sheet switch 20 can be constantly maintained.

That is, the thickness thereof is not particularly limited within a range in which the light guide 12 and the sheet switch 20 are not in contact with each other. However, from the viewpoint of the reduction in the thickness of the sheet switch module 10, the thickness of the light guide 12 is preferably 0.1 to 0.2 mm.

As the adhesive material 13, an adhesive maintaining its own shape is used.

Such an adhesive includes an acrylic resin, a polyurethane resin, an epoxy resin, a urethane resin, a natural rubber-based adhesive, a synthetic rubber-based adhesive, or a double-sided tape that applies these resins or adhesive materials to both sides of the base made of a resin or paper.

In addition, in the state where the sheet switch module 10 is used, the thickness of the adhesive material 13 is not particularly limited as long as it has such a thickness that the light guide 12 and the sheet switch 20 are not in contact with each other.

In terms of the reduction in the thickness of the sheet switch module 10, the thickness thereof is preferably 0.01 to 0.05 mm.

The light extraction portion 16 formed on the back 12a of the light guide 12 includes uneven portion 16A formed on the back 12a of the light guide 12 made of a sheet-shaped resin sheet.

The uneven portion 16A is formed in a required region of the back 12a of the light guide 12 in accordance with a key or a button attempted to be illuminated.

In a region in which the uneven portion 16A is formed, the light from the inside of the light guide 12 is emitted to the back 12a of the light guide 12.

When the emission light from the light source 11 is incident on the first end-face 12e of the light guide 12, in the first light guide region 12A, the incident light is reflected between the back 12a and the surface 12b of the light guide 12 and propagates through the inside of the light guide 12.

That is, the light travels in the +Y direction.

Since the uneven portion 16A is formed in the required region of the back 12a of the light guide 12, the light propagating through the inside of the light guide 12 leaks out from the uneven portion 16A.

Because of this, it is possible to emit the light from the light extraction portion 16 of the light guide 12 to the outside.

That is, it is possible to light up the light extraction portion 16 using the light propagating through the inside of the light guide 12.

The uneven portion 16A constituting the light extraction portion 16 is extremely small dots formed on the back 12a of the light guide 12.

These extremely small dots can be formed by printing methods such as a screen printing method, a gravure printing method, and a pad printing method.

The screen printing method is a method, as one type of stencil printing, of using a plate clad with a screen made of a chemical fiber to chemically produce a plate film on the screen, and then closing up membranes other than the required streaks and rubbing ink through holes in the plate film, to thereby perform printing on the printing surface of a substance to be printed which is installed below the plate.

Since the ink is extruded against the surface to be printed and is printed by penetrating through holes in the plate film of the screen, it is possible to form the uneven portion 16A having the required size.

Since the uneven portion 16A (light extraction portion 16) formed by the screen printing method can be perceived as numerals or characters, it is not necessary to provide operation keys on the back 12a of the light guide 12.

Because of this, it is possible to considerably reduce the thickness of the sheet switch module 10.

Furthermore, it is possible to considerably reduce the thickness of the electronic device to which the sheet switch module 10 is applied.

In addition, according to the screen printing method, it is possible to form the uneven portion 16A (light extraction portion 16) having the desired hue by adjusting the ink.

Therefore, the sheet switch module 10 can be made excellent in design.

Furthermore, the electronic device to which the sheet switch module 10 is applied can be made excellent in design.

The gravure printing is a printing method of forming the uneven portion as mentioned below.

That is, using the plate of which a certain convex portion attempted to be printed is hollowed, ink is applied to the entirety of the plate by an appropriate method so that the ink gets into the hollow.

Thereafter, the surface of the plate is wiped off by a device called a doctor, and then extra ink is scraped off.

Because of this, only the ink in the hollow is left.

Thereafter, the ink is pushed against the surface to be printed and is transferred, and the uneven portion is formed by forming the swollen portion of the ink.

Since the shading of printing can be limited by the width of the hollow and the thickness of the ink, it is possible to form an exquisite uneven shape and to form the desired uneven portion 16A on the back 12a of the light guide 12.

The gravure printing method can form extremely small uneven portion 16A compared to the screen printing method.

Therefore, it is possible to form such uneven portion 16A that cannot be perceived at first glance.

In addition, it is possible to form the uneven portion 16A (light extraction portion 16) having the desired hue by adjusting the ink or the printing plate.

Therefore, the sheet switch module 10 can be made excellent in design.

Furthermore, the electronic device to which the sheet switch module 10 is applied can be made more excellent in design.

The pad printing is a method of forming the uneven portion as mentioned below.

That is, the ink is filled up in the concave portion of an intaglio plate, and the ink of the portion other than the concave portion is scraped away by a blade.

Thereafter, a pad made of silicon or the like is pushed against an intaglio to transfer the ink to the pad.

Thereafter, this pad is pushed against the printing surface of the substance to be printed, thereby allowing the uneven portion to be formed.

Additionally, various shapes such as a spherical shape or a drum shape can be applied to the pad.

According to this method, since a three-dimensional shape can also be accurately transferred, it is possible to form the desired uneven portion 16A on the back 12a of the light guide 12.

Among these printing methods, the screen printing method has an advantage that the printing plate is more inexpensive than that used in the gravure printing method, and that the degree of accuracy is higher than that in the pad printing method.

In addition, the screen printing method has an advantage that the desired uneven portion can be formed by variously changing the printing plate and the ink, and an advantage that excellent reproducibility and mass production can be obtained.

In the sheet switch module 10 according to the present embodiment, when an operator presses the light extraction portion 16 of the light guide 12 using an operating tool such as one's fingertip or a pen, the metal plate 23 is curved downward and is deformed by this press operation.

The central portion of the metal plate 23 abuts on the contact portion 22 by this deformation, thereby allowing the contact portion 22 and the contact portion 26 to be electrically connected to each other.

Therefore, according to the sheet switch module 10 of the present embodiment, it is possible to display the position of the switch module provided with the metal plate 23 using the light leaking from each of the light extraction portions 16.

Furthermore, the light extraction portion 16 is pressed to deform the metal plate 23, whereby it is possible to perform the on/off (conduction and non-conduction) operations of each of the switch elements 30 by switching the conduction of the contact portion 22 and the contact portion 26 with each other.

In the present embodiment, since each of the light extraction portions 16 is disposed facing the metal plate 23, it is possible to deform the metal plate 23 by pressing the light extraction portion 16.

In the sheet switch module 10 according to the present embodiment, the light guide 12 is divided into the first light guide region 12A and the second light guide region 12B.

The groove 15 is provided between these two regions.

In addition, as shown in FIGS. 1A and 1B, the light extraction portion 16 is provided in the first light guide region 12A and the second light guide region 12B.

The installation position and the number of light extraction portions 16 can be set in accordance with a key or a button attempted to be illuminated.

The groove 15 extends in the thickness direction (Z direction) perpendicular to the longitudinal direction (Y direction) of the light guide 12.

Additionally, the groove 15 is provided in the thickness direction from the surface 12b of the light guide 12.

Therefore, in the first light guide region 12A of the light guide 12, when the emission light from the light source 11 is incident on the first end-face 12e, it is possible to light up the light extraction portion 16 provided in the first light guide region 12A using the incident light.

In addition, a portion or the entirety of the light propagating through the inside of the first light guide region 12A of the light guide 12 can be emitted from the groove 15 to the outside.

That is, it is possible to control the amount of the light emitted from the groove 15 to the outside.

It is possible to control the amount of the light emitted from the groove 15 to the outside by adjusting the width d₁, the depth d₂ or the curvature of the groove 15.

When a portion of the light propagating through the inside of the first light guide region 12A is emitted from the groove 15 to the outside, and the remaining light is reflected in the inner surface 15a (interface between the groove 15 and the external space) of the groove 15, the reflected light can propagate from the first light guide region 12A to the second light guide region 12B.

Because of this, it is possible to light up the light extraction portion 16 provided in the second light guide region 12B.

In this case, the amount of the light reflected in the inner surface 15a (interface between the groove 15 and the external space) of the groove 15 is reduced further than that of the emission light from the light source 11.

Therefore, the amounts of the light propagating in the first light guide region 12A and the second light guide region 12B are different from each other, and the brightness of each of the regions is different from each other.

That is, gradation is added to the brightness of the light extraction portion 16 provided in the first light guide region 12A and the light extraction portion 16 provided in the second light guide region 12B by one light source 11, and thus it is possible to light up the light extraction portion 16 provided in each of the regions.

On the other hand, when the entirety of the light propagating through the inside of the first light guide region 12A of the light guide 12 is emitted groove 15 to the outside, there is no case in which the light extraction portion 16 provided in the second light guide region 12B is lit up by the emission light from the light source 11.

That is, it is possible to adjust the gradation of the brightness of two regions or to illuminate only the first light guide region 12A, by appropriately adjusting the width d₁, the depth d₂ or the curvature of the groove 15.

In addition, since the sheet switch 20 adheres to the light guide 12 with the adhesive material 13 which is provided on the back 12a of the sheet-shaped light guide 12 and interposed therebetween, the gap 14 is provided between the light guide 12 and the sheet switch 20.

Therefore, the light guide 12 and the sheet switch 20 are not in contact with each other.

That is, the back 12a and the surface 12b of the light guide 12 are not in contact with another member made of a resin, but are in contact with an air layer.

Therefore, in the first light guide region 12A of the light guide 12, when the emission light from the light source 11 is incident on the first end-face 12e, the incident light propagates through the inside of the light guide 12 while being reflected between the back 12a and the surface 12b of the light guide 12, and thus the rate at which the light leaks out in the portion other than the light extraction portion 16 or the groove 15 is small.

In addition, conventionally, it is necessary to provide a reflective member (reflective sheet) in the interface between the light guide and the sheet switch in order to return the light leaking out to the outside of the light guide to the inside of the light guide.

However, in the present embodiment, since the light guide 12 is not in contact with another member, it is not necessary to provide the conventional reflective member.

Therefore, it is possible to considerably reduce the thickness of the sheet switch module 10.

Furthermore, it is possible to considerably reduce the thickness of the electronic device to which the sheet switch module 10 is applied.

In addition, since the light extraction portion 16 is formed directly on the back 12a of the light guide 12, the light guide 12 itself has a function of the operation key.

Therefore, it is not necessary to laminate the operation key on the light guide unlike a conventional manner, and thus it is possible to considerably reduce the thickness of the sheet switch module 10.

Furthermore, it is possible to considerably reduce the thickness of the electronic device to which the sheet switch module 10 is applied.

Further, the light extraction portion 16 is provided on the surface of the light guide 12 facing the sheet switch 20, that is, the back 12a of the light guide 12.

Therefore, since the light extraction portion 16 is not exposed to the upper surface (surface) of the sheet switch module 10, the light extraction portion 16 is scarcely damaged, and as a result, it is possible to constantly maintain the brightness of the light emitted from the light extraction portion 16.

In addition, in the present embodiment, the sheet switch module 10 is shown by an example in which the light guide 12 is divided into the first light guide region 12A and the second light guide region 12B and extends in the thickness direction perpendicular to the longitudinal direction of the light guide 12 between the first light guide region 12A and the second light guide region 12B, and the groove 15 is provided in the thickness direction from the surface 12b of the light guide 12.

However, the sheet switch module of the present invention is not limited thereto.

In the sheet switch module of the present invention, the light guide may be divided into three or more arbitrarily-shaped regions, and the width, the depth or the curvature of the groove provided between each of the regions can be adjusted in accordance with the shape of each of the regions.

In addition, in the present embodiment, the sheet switch module 10 is shown by an example in which the light extraction portion 16 constituted by the uneven portion 16A is provided on the back 12a of the light guide 12.

However, the sheet switch module of the present invention is not limited thereto.

In the sheet switch module of the present invention, the light extraction portion constituted by the uneven portion may be provided on the surface 12b of the light guide 12.

That is, the light extraction portion constituted by the uneven portion may be provided on the surface on the side opposite to the surface of the light guide facing the sheet switch.

In addition, in the sheet switch module of the present invention, a protective film made of a light-transmissive resin may be provided so as to cover the light extraction portion provided on the back or the surface of the light guide by a printing method, or the like.

The light extraction portion is scarcely damaged by this protective film.

### <Second Embodiment>

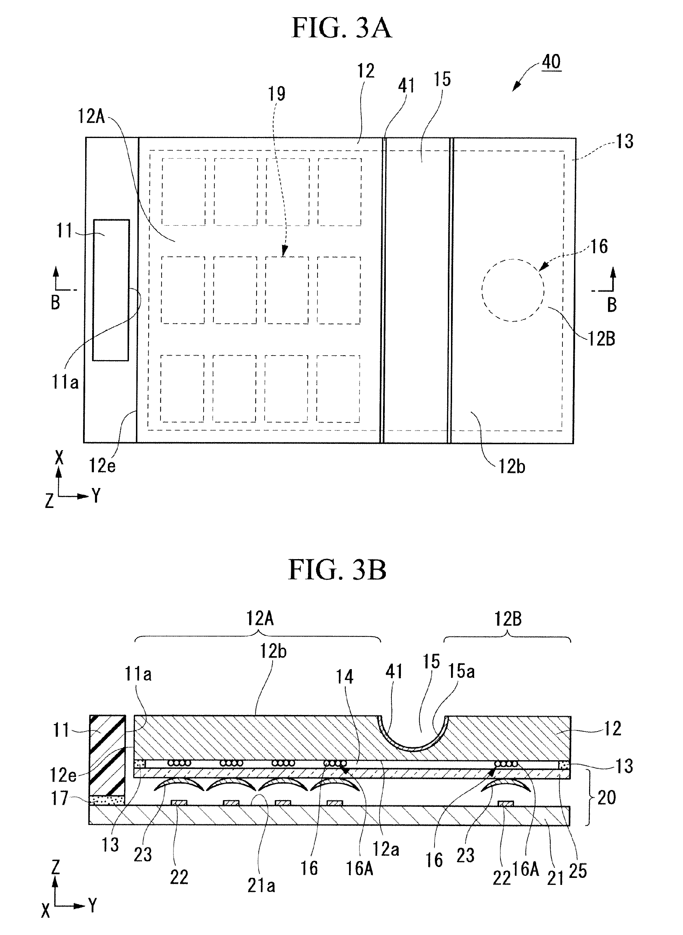

FIG. 3A is a schematic diagram (plan view) showing the sheet switch module according to a second embodiment of the present invention.
FIG. 3B is a cross-sectional view taken along the B-B line of FIG. 3A.

In FIGS. 3A and 3B, the same components as those in the first embodiment shown in FIGS. 1A and 1B are denoted by the same numerals and signs, and the description thereof will be omitted.

The point in which a sheet switch module 40 according to the second embodiment is different from the sheet switch module 10 according to the first embodiment is in that the inner surface 15a of the groove 15 of the light guide 12 is colored and a colored layer 41 is provided therein.

The material constituting the colored layer 41 is not particularly limited as long as it is a coating material having a light shielding property. However, for example, resins such as a polyurethane-based resin and an acrylic-based resin and the coating material dispersed into various types of organic solvents are used.

The hue of the colored layer 41 is not particularly limited as long as it has a sufficient light shielding property, but a black color is preferable because it absorbs the light best and has a high light shielding property.

In addition, the thickness of the colored layer 41 is not particularly limited as long as it has a sufficient light shielding property.

The colored layer 41 is formed on the inner surface 15a of the groove 15 of the light guide 12 by applying and coloring the coating material having a light shielding property.

Since the colored layer 41 is provided in the sheet switch module 40, it is possible to prevent the light propagating through the inside of the first light guide region 12A of the light guide 12 from being emitted from the groove 15 to the outside.

Because of this, it is possible to prevent the groove 15 which is not required to emit light from emitting light.

In addition, in the present embodiment, the sheet switch module 40 is shown by an example in which the inner surface 15a of the groove 15 of the light guide 12 is colored by the coating material having a light shielding property and the colored layer 41 is provided therein.

However, the sheet switch module of the present invention is not limited thereto.

In the sheet switch module of the present invention, it is also possible to form the colored layer by filling the coating material having a light shielding property in the inside of the groove of the light guide.

### <Third Embodiment>

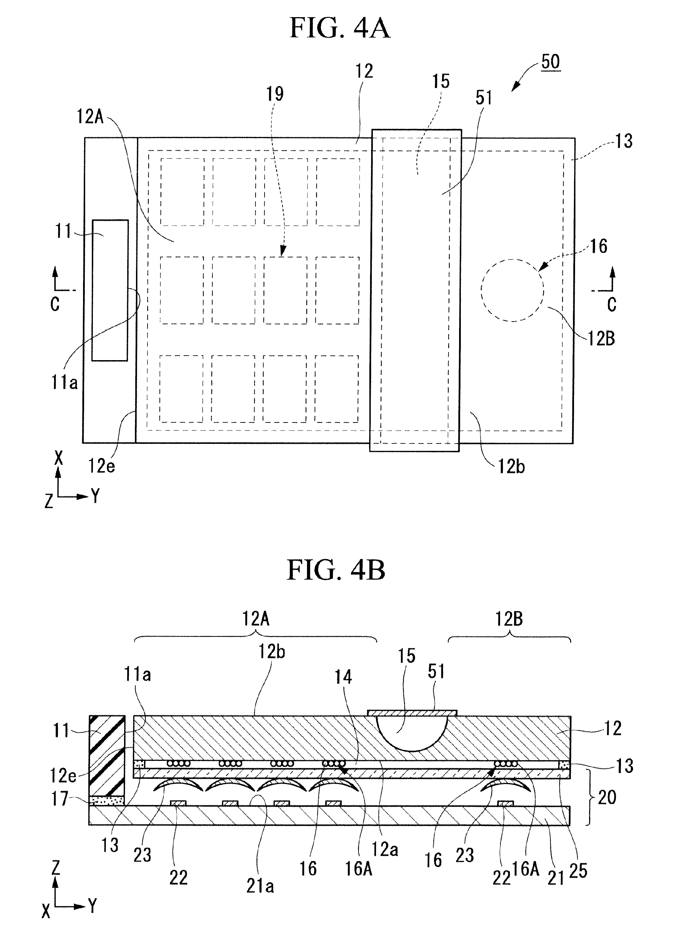

FIG. 4A is a schematic diagram (plan view) showing the sheet switch module according to a third embodiment of the present invention.
FIG. 4B is a cross-sectional view taken along the C-C line of FIG. 4A.

In FIGS. 4A and 4B, the same components as those of the sheet switch module 10 shown in FIGS. 1A and 1B are denoted by the same reference signs, and the description thereof will be omitted.

The point in which a sheet switch module 50 of the present embodiment is different from the sheet switch module 10 of the above-mentioned first embodiment is in that a light shielding sheet 51 is disposed on the surface 12b of the light guide 12 so as to cover the groove 15.

The material constituting the light shielding sheet 51 is not particularly limited as long as it is a light shielding material. However, for example, a resin obtained by coloring one resin selected from a group consisting of a polyurethane-based resin, a polycarbonate-based resin, a silicon-based resin, a polystyrene-based resin, a polyimide-based resin, and the like is used as the material.

The hue of the light shielding sheet 51 is not particularly limited as long as it has a sufficient light shielding property, but a black color is preferable because it absorbs the light best and has a high light shielding property.

In addition, the thickness of the light shielding sheet 51 is not particularly limited as long as it has a sufficient light shielding property.

In the sheet switch module 50, since the light shielding sheet 51 is disposed on the surface 12b of the light guide 12 so as to cover the groove 15, it is possible to prevent the light propagating through the inside of the first light guide region 12A of the light guide 12 from being emitted from the groove 15 to the outside.

Because of this, it is possible to prevent the groove 15 which is not required to emit light from emitting light.

### <Fourth Embodiment>

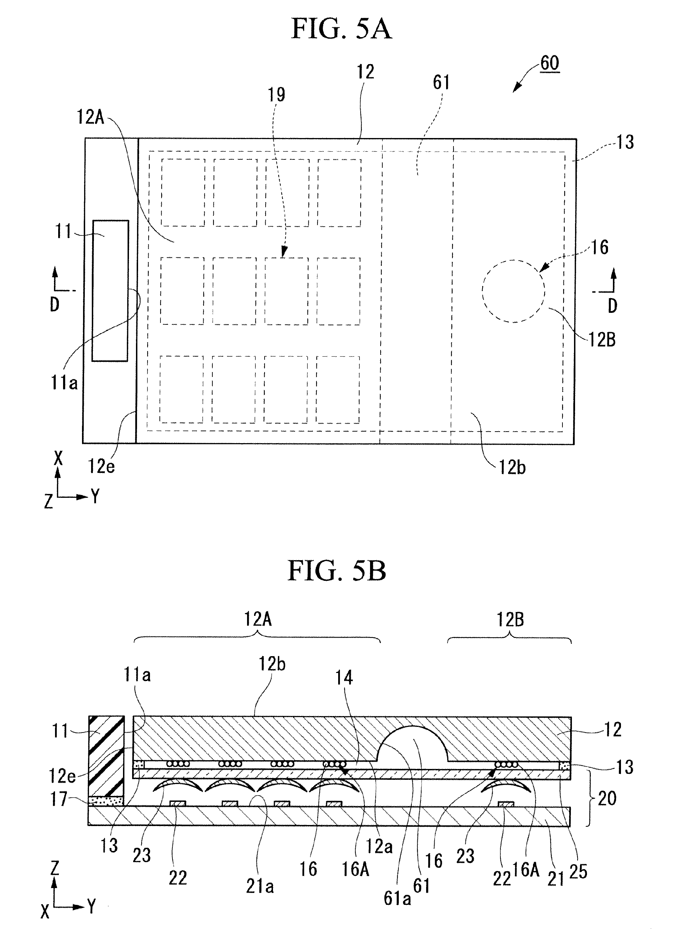

FIG. 5A is a schematic diagram (plan view) showing the sheet switch module according to a fourth embodiment of the present invention.
FIG. 5B is a cross-sectional view taken along the D-D line of FIG. 5A.

In FIGS. 5A and 5B, the same components as those of the sheet switch module 10 shown in FIGS. 1A and 1B are denoted by the same reference signs, and the description thereof will be omitted.

The point in which a sheet switch module 60 of the present embodiment is different from the sheet switch module 10 of the above-mentioned first embodiment is in that a groove 61 is provided.

That is, in the first embodiment, the groove 15 is concaved in the -Z direction with respect to the surface 12b of the light guide 12, and on the other hand, in the present embodiment, the groove 61 is concaved in the +Z direction with respect to the back 12a of the light guide 12.

Specifically, the groove 61 extending in the thickness direction (Z direction) perpendicular to the longitudinal direction (Y direction) is provided in the light guide 12 in the thickness direction from the back 12a of the light guide 12.

The sheet switch module 60 exhibits the same effect as that of the above-mentioned sheet switch module 10.

In addition, in the sheet switch module 60, similarly to the above-mentioned sheet switch module 40, the inner surface 61a of the groove 61 of the light guide 12 is colored, so that the colored layer may be provided therein, or the light shielding sheet may be disposed on the back 12a of the light guide 12 so as to cover the groove 61.

### <Fifth Embodiment>

FIG. 6 is a schematic cross-sectional view showing the sheet switch module according to a fifth embodiment of the present invention.

In FIG. 6, the same components as those of the sheet switch module 10 shown in FIG. 1A are denoted by the same reference signs, and the description thereof will be omitted.

The point in which a sheet switch module 70 of the present embodiment is different from the sheet switch module 10 of the above-mentioned first embodiment is in that a second light source 71 is disposed.

Specifically, the second light source 71 is disposed on the second end-face (end-face of the second light guide region 12B) 12f side of the light guide 12, and an emission surface 71a of the second light source 71 and the second end-face (end-face of the second light guide region 12B) 12f of the light guide 12 are disposed close to each other.

As the second light source 71, the same light source as the above-mentioned light source 11 is used.

In addition, the second light source 71 is provided on the surface 21a of the board 21 by a solder 72.

Similarly to the above-mentioned light source 11, the second light source 71 can also be provided on the board 21 by an adhesive or a mechanical connection method.

In the sheet switch module 70, the light guide 12 is divided into the first light guide region 12A and the second light guide region 12B, and the groove 15 is provided between these two regions.

The groove 15 extends in the thickness direction (Z direction) perpendicular to the longitudinal direction (Y direction) of the light guide 12, and is concaved in the -Z direction with respect to the surface 12b of the light guide 12.

Further, the sheet switch module 70 includes the light source 11 corresponding to the first light guide region 12A, and the second light source 71 corresponding to the second light guide region 12B.

Therefore, the sheet switch module 70 exhibits the same effect as that of the above-mentioned sheet switch module 10, and in the second light guide region 12B of the light guide 12, when the emission light from the second light source 71 is incident on the second end-face 12f of the light guide 12, it is possible to light up the light extraction portion 16 provided in the second light guide region 12B using the incident light.

In addition, similarly to the above-mentioned sheet switch module 10, it is possible to adjust the amount of the light emitted from the groove 15 to the outside by adjusting the width, the depth, the polarizability or the like of the groove 15.

Therefore, a portion or the entirety of the light which is emitted from the second light source 71 and propagates through the inside of the second light guide region 12B of the light guide 12 can be emitted from the groove 15 to the outside.

When a portion of the light is emitted from the groove 15 to the outside and the remaining light is reflected in the inner surface 15a (interface between the groove 15 and the external space) of the groove 15, the reflected light propagates from the second light guide region 12B to the first light guide region 12A, thereby allowing the light extraction portion 16 provided in the first light guide region 12A to be lit up.

In this case, the amount of the light reflected in the inner surface 15a (interface between the groove 15 and the external space) of the groove 15 is reduced further than the amount of the emission light from the second light source 71. Therefore, in the second light guide region 12B and the first light guide region 12A, the amounts of the propagating light are different from each other, and the brightness of each of the regions is also different from each other.

That is, gradation is added to the brightness of the light extraction portion 16 provided in the second light guide region 12B and the light extraction portion 16 provided in the first light guide region 12A by one second light source 71, and thus it is possible to light up the light extraction portion 16 provided in each of the regions.

On the other hand, when the entirety of the light propagating through the inside of the second light guide region 12B of the light guide 12 is emitted from the groove 15 to the outside, there is no case in which the light extraction portion 16 provided in the first light guide region 12A is lit up by the emission light from the second light source 71.

Thereby, it is possible to control the illumination of the first light guide region 12A and the second light guide region 12B.

In addition, in the sheet switch module 70, similarly to the above-mentioned sheet switch module 40, the inner surface 15a of the groove 15 of the light guide 12 is colored, so that the colored layer may be provided therein, or the light shielding sheet may be disposed on the surface 12b of the light guide 12 so as to cover the groove 15.

### <Sixth Embodiment>

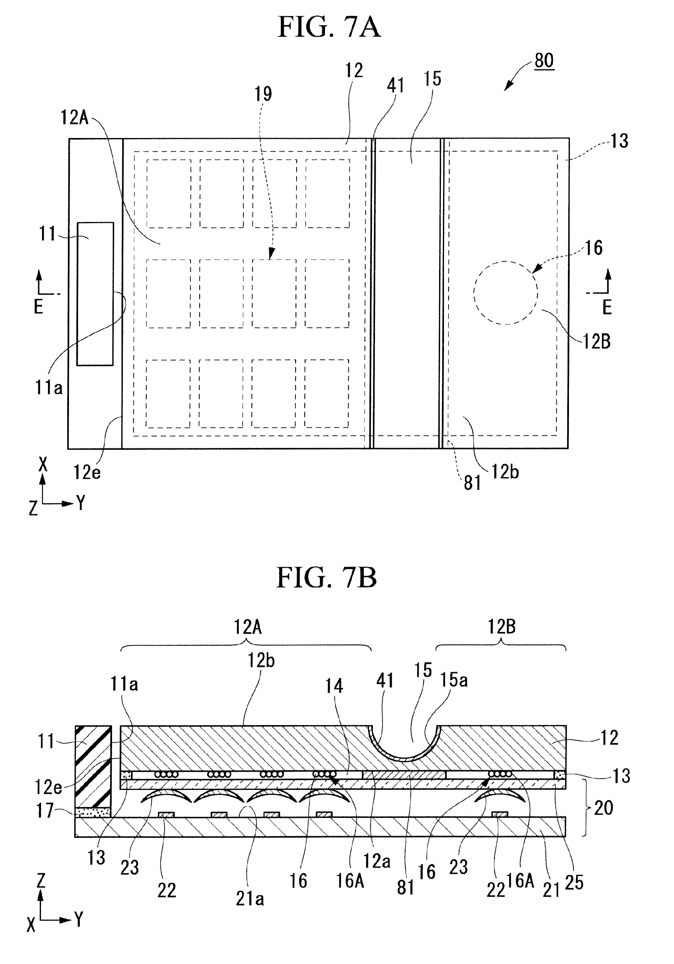

FIG. 7A is a schematic diagram (plan view) showing the sheet switch module according to a sixth embodiment of the present invention.
FIG. 7B is a cross-sectional view taken along the E-E line of FIG. 7A.

In FIGS. 7A and 7B, the same components as those of the sheet switch module 40 shown in FIGS. 3A and 3B are denoted by the same reference signs, and the description thereof will be omitted.

The point in which a sheet switch module 80 of the present embodiment is different from the sheet switch module 40 of the above-mentioned third embodiment is in that an adhesive material 81 is formed below the groove 15.

More specifically, in the back 12a of the light guide 12, the adhesive material 81 is formed in a position corresponding to the groove 15.

It is possible to further reduce the amount of the light reflected in the inner surface 15a of the groove 15 by the adhesive material 81.

Furthermore, the strength of the light guide 12 reduced by the groove 15 can also be reinforced by the adhesive material 81.

The adhesive material 81 is not particularly limited as long as it has a sufficient light shielding property, but a black color is preferable because it absorbs the light best and has a high light shielding property.

In addition, in FIG. 7B, the adhesive material 81 is formed in the gap 14 so that the light guide 12 and the board 21 are connected to each other.

That is, in the form shown in the drawing, the adhesive material 81 has the same thickness as the gap 14 in the Z direction.

However, when the adhesive material 81 has a sufficient light shielding property without being limited thereto, it is possible to form the adhesive material only on the back 12a of the light guide 12.

That is, the adhesive material 81 can also have a thickness smaller than the gap 14 in the Z direction.

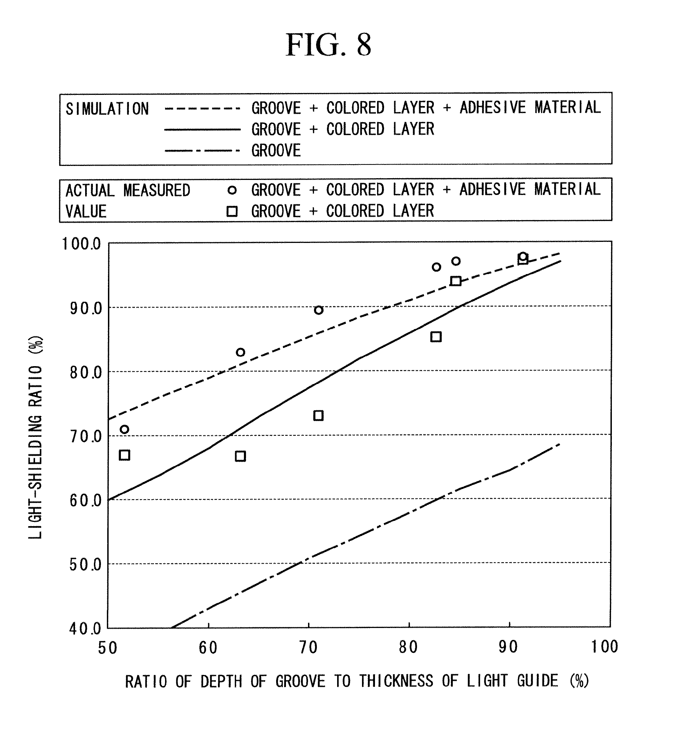

Hereinafter, reference will be made to FIG. 8 to describe a relationship between the depth of the groove and the light-shielding ratio.

FIG. 8 is a graph for explaining a relationship of the ratio of the depth of the groove to the thickness of the light guide 12 and the light-shielding ratio.

First, the light guide 12 made of a urethane resin is prepared.

The thickness of the light guide 12 in the Z direction is 0.2 mm, and the length thereof in the Y direction is 50 mm.

The relationship between the ratio of the depth of the groove to the thickness of the light guide 12 and the light-shielding ratio is measured by fixing the width d₁ of the groove 15 in the Y direction to 500 µm and sequentially changing the depth d₂ of the groove 15 in the Z direction, with respect to the light guide 12.

Here, the light-shielding ratio is indicative of a ratio by which the light is shielded by the groove after the formation of the groove as compared with before the formation of the groove.

Specifically, before the groove is formed in the light guide, the amount (Q₀) of the light emitted from the second end-face 12f is measured.

Thereafter, the groove is formed in the light guide, and the amount (Q₁) of the light emitted from the second end-face 12f through the groove is measured.

Thereafter, it is possible to calculate the light-shielding ratio (Q₁/Q₀) by calculating the ratio of the light amount (Q₁) after the formation of the groove to the light amount (Q₀) before the formation of the groove.

The relationship between the ratio of the depth of the groove to the thickness of the light guide 12 and the light-shielding ratio is measured by performing simulations, in the conditions shown in Table 1, on the sheet switch module 10 according to the first embodiment, the sheet switch module 40 according to the second embodiment, and the sheet switch module 80 according to the sixth embodiment.

In Table 1, d₂ is a depth of the groove 15 in the Z direction, and d is a thickness of the light guide 12 in the Z direction.

Here, d₂/d is indicative of the ratio of the depth of the groove to the thickness of the light guide 12.

Further, in Table 1, "groove only" is indicative of the sheet switch module 10 in which the groove is formed in the light guide 12, as in the first embodiment.

In addition, "groove + colored layer" is indicative of the sheet switch module 40 in which the groove and the colored layer are formed in the light guide 12, as in the second embodiment.

In addition, "groove + colored layer + adhesive material" is indicative of the sheet switch module 80 in which the groove, the colored layer and the adhesive material are formed in the light guide 12, as in the sixth embodiment.

**[Table 1]**

| No. | d₂ [µm] | d₂/d (%) | Light-shielding ratio (%) | | |
|---|---|---|---|---|---|
| | | | Groove only | Groove + colored layer | Groove + colored layer + adhesive material |
| 1 | 10 | 5 | 0.3 | 34.5 | 51.3 |
| 2 | 20 | 10 | 1.9 | 35.0 | 52.6 |
| 3 | 30 | 15 | 5.5 | 37.0 | 53.9 |
| 4 | 40 | 20 | 8.3 | 39.1 | 55.9 |
| 5 | 50 | 25 | 12.9 | 41.0 | 58.4 |
| 6 | 60 | 30 | 17.2 | 44.1 | 60.7 |
| 7 | 70 | 35 | 22.0 | 47.9 | 63.7 |
| 8 | 80 | 40 | 26.5 | 51.3 | 66.2 |
| 9 | 90 | 45 | 30.7 | 55.5 | 69.5 |
| 10 | 100 | 50 | 35.2 | 60.0 | 72.6 |
| 11 | 110 | 55 | 39.0 | 63.9 | 76.0 |
| 12 | 120 | 60 | 43.1 | 68.2 | 79.1 |
| 13 | 130 | 65 | 46.9 | 72.9 | 82.3 |
| 14 | 140 | 70 | 50.9 | 77.4 | 85.5 |
| 15 | 150 | 75 | 54. 3 | 81.9 | 88.5 |
| 16 | 160 | 80 | 58.0 | 86.0 | 91.2 |
| 17 | 170 | 85 | 61.7 | 90.1 | 94.0 |
| 18 | 180 | 90 | 64.6 | 93.8 | 96.3 |
| 19 | 190 | 95 | 68.6 | 97.0 | 98.3 |

As can be seen from Table 1 and FIG. 8, when the light-shielding ratio of, for example, 85% or more is desired through the groove 15, it is possible to form the groove having a depth of 70% or more with respect to the thickness of the light guide 12, to install the colored layer in the inner surface of the groove, and to form the adhesive material below the groove.

Further, when the light-shielding ratio of, for example, 90% or more is desired, it is possible to form the groove having a depth of 80% or more with respect to the thickness of the light guide 12, to install the colored layer in the inner surface of the groove, and to form the adhesive material below the groove.

Further, as can be seen from the above simulations, it is possible to adjust the gradation of the brightness of the first light guide region 12A and the second light guide region 12B by adjusting the depth of the groove.

Further, it is also possible to block the light from the first light guide region 12A to the second light guide region 12B by adjusting the depth of the groove.

Further, the following actual test is performed while the thickness of the light guide 12 is fixed to 0.2 mm and the width d₁ and the depth d₂ of the groove are changed.

The test conditions and the measured light-shielding ratio are shown in Table 2.

Additionally, in the following test, a case in which only the groove is formed in the light guide 12 as in the first embodiment is omitted.

Moreover, d₂/d shown in Table 2 is indicative of the ratio of the depth of the groove to the thickness of the light guide 12, similarly to Table 1.

The following actual measured values are shown in FIG. 8.

**[Table 2]**

| d₁ [µm] | d₂ [µm] | d₂/d (%) | Light-shielding ratio (%) | |
|---|---|---|---|---|
| | | | Groove + colored layer | Groove + colored layer + adhesive material |
| 184.2 | 182.7 | 91.4 | 97.3 | 97.7 |
| 207.8 | 169.3 | 84.7 | 93.9 | 97.1 |
| 217.3 | 165.4 | 82.7 | 85.2 | 96.1 |
| 266.8 | 141.9 | 71.0 | 73.1 | 89.6 |
| 257.7 | 126.3 | 63.2 | 66.8 | 83.1 |
| 274.7 | 103.2 | 51.6 | 67.0 | 71.1 |

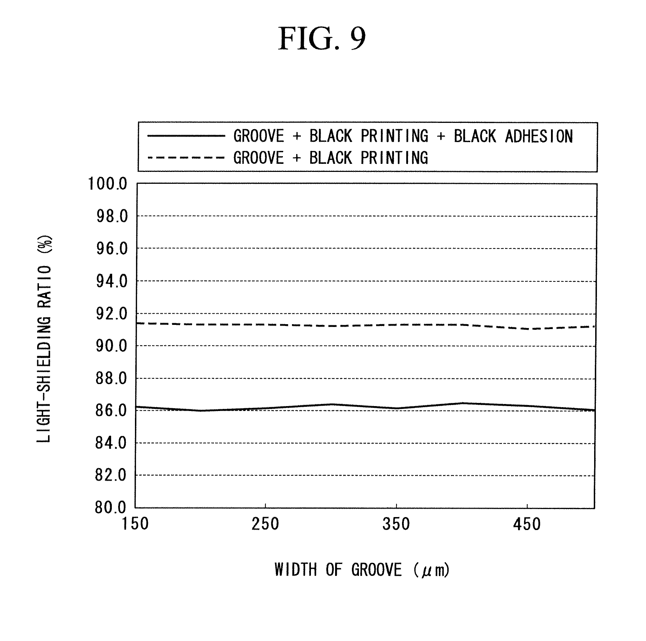

Hereinafter, reference will be made to FIG. 9 to describe a relationship between the width of the groove and the light-shielding ratio.

FIG. 9 is a graph for explaining a relationship between the width of the groove and the light-shielding ratio.

The relationship between the width of the groove and the light-shielding ratio was measured as follows.

The light guide 12 made of a urethane resin of which the thickness in the Z direction is, for example, 0.2 mm is prepared.

The groove 15 of which the depth in the Z direction is, for example, 150 µm is formed in the light guide 12.

In this manner, the ratio (80%) of the depth of the groove 15 to the thickness of the light guide 12 is made constant.

In this case, the light-shielding ratio of the groove 15 is measured by sequentially changing the width of the groove 15.

Because of this, it is possible to measure the influence of the width of the groove on the light-shielding ratio.

The result thereof is shown in Table 3.

In Table 3, "groove + colored layer" and "groove + colored layer + adhesive material" are indicative of the sheet switch module 40 of the second embodiment and the sheet switch module 80 of the sixth embodiment, respectively.

**[Table 3]**

| Width d₁ of groove [µm] | Light-shielding ratio (%) | |
|---|---|---|
| | Groove + colored layer | Groove + colored layer + adhesive material |
| 150 | 86.2 | 91.4 |
| 200 | 85.9 | 91.3 |
| 250 | 86.1 | 91. 3 |
| 300 | 86.4 | 91.2 |
| 350 | 86.2 | 91.3 |
| 400 | 86.5 | 91.2 |
| 450 | 86. 3 | 91.1 |
| 500 | 86.0 | 91.2 |

As can be seen from Table 3 and FIG. 9, when the depth d₂ of the groove 15 in the Z direction is constant, the width of the groove 15 does not influence the light-shielding ratio.

### <Seventh Embodiment>

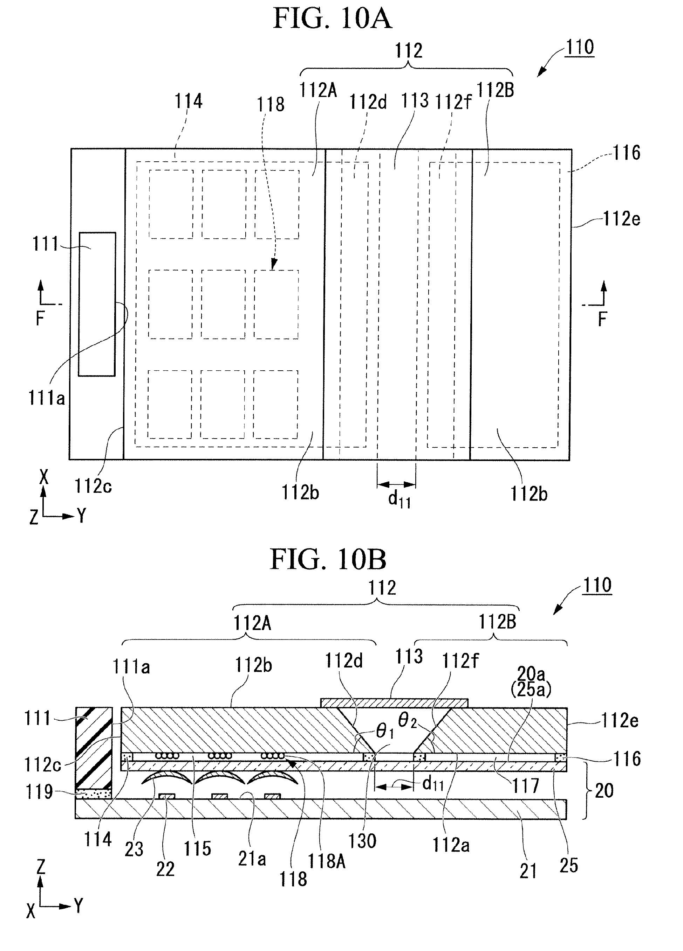

FIG. 10A is a schematic diagram (plan view) showing the sheet switch module according to a seventh embodiment of the present invention.
FIG. 10B is a cross-sectional view taken along the F-F line of FIG. 10A.

A sheet switch module 110 according to the present embodiment includes a light source 111, a sheet-shaped light guide 112, the sheet switch 20 disposed on the back 112a side of the light guide 112, and a light shielding sheet 113 disposed on the surface 112b of the light guide 112.

The light guide 112 is formed in a rectangular shape when seen in a plan view (X-Y plane) of FIG. 10A.

The light guide 112 is disposed close to an emission surface 111a of the light source 111.

As shown in FIG. 10B, the light guide 112 includes a back 112a directed to the -Z direction, a surface 112b which is a surface opposite thereto, a first end-face 112c directed to the light source 111, and a second end-face 112e on the opposite side thereof.

As shown in FIG. 10B, a slit 130 penetrating through from the surface 112b to the back 112a is formed in the light guide 112.

The light guide 112 is divided into a first light guide region 112A and a second light guide region 112B by the slit 130.

That is, the light guide 112 includes the first light guide region 112A and the second light guide region 112B.

The first light guide region 112A and the second light guide region 112B are disposed in parallel to each other at a predetermined distance in the Y direction.

The slit 130 has a trapezoidal shape in the Y-Z cross-section.

That is, the slit 130 has a plane inclined on the Y-Z plane.

Specifically, as shown in FIG. 10B, the width of the slit 130 in the back 112a of the light guide 112 is smaller than the width of the slit 130 in the surface 112b thereof.

A first inclined plane 112d and a second inclined plane 112f are formed in the light guide 112 by the slit 130.

More specifically, the first inclined plane 112d is formed on the first light guide region 112A of the light guide 112, and the second inclined plane 112f is formed on the second light guide region 112B thereof.

The first inclined plane 112d of the first light guide region 112A and the second inclined plane 112f of the second light guide region 112B are disposed facing each other.

Additionally, in the following description, the first light guide region 112A and the second light guide region 112B are sometimes referred to as the light guide 112 collectively.

In addition, the angle (end-face angle of the slit) between the first inclined plane 112d of the first light guide region 112A and a surface 25a of the press sheet 25 constituting the sheet switch 20 in the -Y direction is denoted by θ₁, and the angle (end-face angle of the slit) between the second inclined plane 12f and the surface 25a of the press sheet 25 constituting the sheet switch 20 in the +Y direction is denoted by θ₂.

The angle θ₁ and the angle θ₂ mentioned above are all acute angles.

Furthermore, the light shielding sheet 113 that covers the slit 130 is disposed on the surface 112b of the light guide 112.

Specifically, the light shielding sheet 113 is disposed over the first light guide region 112A and the second light guide region 112B so as to cover the first inclined plane 112d of the first light guide region 112A and the second inclined plane 112f of the second light guide region 112B.

The light source 111 is disposed close to the first end-face 112c of the first light guide region 112A, and light from the light source 111 is incident on the first light guide region 112A.

The sheet switch 20 adheres to the back 112a of the first light guide region 112A with a first adhesive material 114 interposed between having a frame shape.

As shown in FIG. 10A, the first adhesive material 114 is provided in the periphery of the back 112a of the first light guide region 112A.

That is, the first adhesive material 114 is provided in a rectangle shape along the outer circumference of the first light guide region 112A.

Because of this, a gap 115 is provided between the first light guide region 112A and the sheet switch 20.

That is, the first light guide region 112A and the sheet switch 20 are not in contact with each other, and are disposed facing each other at a distance corresponding to the thickness of the first adhesive material 114.

The thickness of the gap 115 in the Z direction is substantially the same as the thickness of the first adhesive material 114.

In addition, the sheet switch 20 adheres to the second light guide region 112B with a second adhesive material 116 interposed between having a frame shape.

As shown in FIG. 10A, the second adhesive material 116 is provided in the periphery of the back 112a of the second light guide region 112B.

That is, the second adhesive material 116 is provided in a rectangle shape along the outer circumference of the second light guide region 112B.

Because of this, a gap 117 is provided between the second light guide region 112B and the sheet switch 20.

That is, the second light guide region 112B and the sheet switch 20 are not in contact with each other, and are disposed facing each other at a distance corresponding to the thickness of the second adhesive material 116.

The thickness of the gap 117 in the Z direction is substantially the same as of the thickness of the second adhesive material 116.

The thickness of the gap 115 provided between the first light guide region 112A and the sheet switch 20, that is, the distance between the first light guide region 112A and the sheet switch 20 is not particularly limited.

In the state where the sheet switch module 110 is used, the distance (thickness of the gap 115) between the first light guide region 112A and the sheet switch 20 is not particularly limited as long as the first light guide region 112A and the sheet switch 20 are not in contact with each other.

From the viewpoint of the reduction in the thickness of the sheet switch module 110, the distance between the first light guide region 112A and the sheet switch 20 is preferably 0.01 to 0.05 mm.

In addition, the thickness of the gap 117 provided between the second light guide region 112B and the sheet switch 20, that is, the distance between the second light guide region 112B and the sheet switch 20 is not particularly limited.

In the state where the sheet switch module 110 is used, the distance (thickness of the gap 117) between the second light guide region 112B and the sheet switch 20 is not particularly limited as long as the second light guide region 112B and the sheet switch 20 are not in contact with each other.

In terms of the reduction in the thickness of the sheet switch module 110, the distance between the second light guide region 112B and the sheet switch 20 is preferably 0.01 to 0.05 mm.

In the sheet switch module 110, the light emitted from the light source 111 is incident on the first end-face 12c of the first light guide region 112A.

The incident light propagates through the inside of the first light guide region 112A.

The incident light is emitted from the first inclined plane 112d of the first light guide region 112A to the outside.

In this case, it is necessary for the emission light from the first inclined plane 112d not to be incident on the second inclined plane 112f of the second light guide region 112B.

Therefore, it is necessary to appropriately adjust the angle θ₁ and the angle θ₂ so that the emission light from the first inclined plane 112d is not incident on the second inclined plane 112f.

Among them, the angle between the first inclined plane 112d of the first light guide region 112A and the surface 25a of the press sheet 25 constituting the sheet switch 20 in the -Y direction is the angle θ₁.

In addition, the angle between the second inclined plane 112f of the second light guide region 112B and the surface 25a of the press sheet 25 constituting the sheet switch 20 in the +Y direction is the angle θ₂.

Specifically, in order that the emission light from the first inclined plane 112d is not incident on the second inclined plane 112f, the angle θ₁ and the angle θ₂ are preferably 20 to 30°, and are more preferably 25 to 30°.

When the angle θ₁ and the angle θ₂ are less than 20°, there may be a case in which the thickness of the light guide 112 becomes excessively small, and thus drawbacks occur when the light emitted from the light source 111 is caused to propagate through the inside of the first light guide region 112A.

On the other hand, when the angle θ₁ and the angle θ₂ exceed 30°, the emission light from the first inclined plane 112d of the first light guide region 112A is incident on the second inclined plane 112f of the second light guide region 112B.

In addition, the first width d₁₁ of the slit 130 in the Y direction is not particularly limited as long as the angle θ₁ and the angle θ₂ mentioned above are within a predetermined range, but it is preferably equal to or more than 0.4 mm, and more preferably equal to or more than 0.6 mm.

When the first width d₁₁ is less than 0.4 mm, there is a possibility that the emission light from the first inclined plane 112d of the first light guide region 112A may be incident on the second inclined plane 112f of the second light guide region 112B.

Here, the first width d₁₁ is indicative of the width of the slit 130 in the back 112a of the light guide 112.

That is, the first width d₁₁ is a distance between the end of the first inclined plane 112d of the first light guide region 112A facing the surface 20a (surface 25a of the press sheet 25) of the sheet switch 20 and the end of the second inclined plane 112f of the second light guide region 112B facing the surface 20a (surface 25a of the press sheet 25) of the sheet switch 20.

As shown in FIG. 10B, the sheet switch 20 is disposed facing the back 112a side of the first light guide region 112A.

Furthermore, a light extraction portions 118 are formed in a predetermined position on the back 112a of the first light guide region 112A.

Moreover, light extraction portions 118 are aligned when seen in a plan view (X-Y plane) with respect to a plurality of pressure-sensitive switch elements 30 constituting the sheet switch 20.

That is, the light extraction portion 118 is disposed so as to face the metal plate 23 of each of the switch elements 30.

Similarly to the above-mentioned embodiment, contact portions 22 are provided at a predetermined distance in the surface 21a (surface facing the first light guide region 112A) of the board 21.

Furthermore, the dome-shaped metal plate 23 is provided so that each of the contact portions 22 is located substantially in the center to cover each of the contact portions 22.

Moreover, the press sheet 25 is provided so as to cover the metal plate 23 with the adhesive layer 24 interposed therebetween.

In more detail, a plurality of contact portions 22 made of a conductive material is provided at a predetermined distance on the surface 21a of the board 21 formed of a printed circuit board such as a PCB (Printed Circuit Board) or an FPC (Flexible Printed Circuit).

The annular contact portions 26 made of a conductive material are provided in the periphery of the contact portions 22.

Furthermore, the dome-shaped metal plates 23 that cover the contact portions 22 and the contact portions 26 are provided.

The electrical connection and disconnection between the contact portion 22 and the contact portion 26 can be switched by the metal plate 23.

Here, the predetermined distance between each of the contact portions 22 can be set in accordance with the placement position and the size of key buttons to be illuminated.

In addition, the contact portions 22 and the annular contact portions 26 are made of conductive materials, and can be respectively formed of the same or different conductive material without being particularly limited as long as the materials are conductible.

The metal plate 23 has a flexibility to be attachable and detachable to and from the contact portion 22, and forms a concave bowl-shaped metal dome on the side opposite to the surface 21a of the board 21.

That is, the metal plate 23 is an arch-shaped flexible plate protruding in the +Z direction when seen in a cross-sectional view of FIG. 2.

When external force is applied to the upper surface 23a of the metal plate 23, the metal plate 23 is curved in the -Z direction, and when the external force is eliminated, the metal plate can be restored to the original state by its flexibility.

Therefore, when an operator presses the central portion of the upper surface 23a of the metal plate 23 using an operating tool such as their fingers, the central portion of the upper surface 23a of the metal plate 23 is deformed so as to be curved toward the surface 21a side of the board 21.

Among them, the upper surface 23a of the metal plate 23 is a surface on the side opposite to the surface facing the surface 21a of the board 21, that is, a surface directed to the +Z direction.

The lower surface of the metal plate 23 abuts on the contact portion 22 by the curvature of the metal plate 23, thereby allowing the contact portion 22 and the contact portion 26 to be electrically connected to each other.

The lower surface of the metal plate 23 is a surface facing the surface 21a of the board 21, that is, a surface directed to the -Z direction.

Therefore, one pressure-sensitive switch element 30 is constituted by the contact portion 22 provided on the surface 21a of the board 21, the contact portion 26 provided in the periphery thereof, the metal plate 23 that covers the contact portion 22 and the contact portion 26, and the press sheet 25 that cover them.

Switch elements 30 are provided on the surface 21a of the board 21, to form the sheet switch 20.

In addition, the press sheet 25 covers the metal plate 23 with the adhesive layer 24, which is formed on the surface facing the surface 21a of the board 21, interposed therebetween, and can maintain the position of the metal plate 23.

As the light source 111, a light-emitting element such as a light-emitting diode (LED) and a light-emitting body such as a cold-cathode tube are used.

When the light source 111 is made of an LED, it is configured such that a light-emitting element chip is embedded in the inside of a box-shaped case, and light emitted by the light-emitting element chip can be emitted from the emission surface 111a which is the lateral side of a case of the light source 111.

In addition, the light source 111 is provided on the surface 21a of the board 21 by a solder 119.

The light guide 112 (the first light guide region 112A and the second light guide region 112B) is made of a sheet-shaped resin, and has, for example, a rectangular shape when seen in a plan view.

The resin constituting the light guide 112 is not particularly limited as long as it is a light-transmissive resin and an elastically deformable resin.

For example, one type of resin selected from a group consisting of a polyurethane-based resin, a polycarbonate-based resin, a silicon-based resin, a polystyrene-based resin, a polyimide-based resin, elastomer of polymethylmethacrylate (PMMA), and urethane acrylate is used.

Among these resins, in order to constantly maintain the width of the gap 115 provided between the first light guide region 112A and the sheet switch 20 and the width of the gap 117 provided between the second light guide region 112B and the sheet switch 20, that is, in order for the light guide 112 and the sheet switch 20 not to be in contact with each other, a resin having an adequate rigidity is preferable, and specifically, a polycarbonate-based resin is preferable.

In addition, the polycarbonate-based resin is suitable because the transmittance of the light is high even when its thickness is small.

In addition, since a polyurethane-based resin or a silicon resin has an elasticity, the upper surface of the light guide 112 made of these resins is scarcely damaged, and the sense of touch when the light extraction portion 118 is pressed is more comfortable.

The thickness of the light guide 112 is not particularly limited as long as the light guide can be curved in the Z direction when it has a high transmittance for the emission light of the light source 111 and is pressed in the -Z direction.

That is, when the light guide 112 is not pressed, the light guide 112 and the sheet switch 20 are not in contact with each other, and when an operator presses the light guide 112 using an operating tool such as their fingertip or a pen, the light guide 112 is curved in the -Z direction and is deformed by this press.

The metal plate 23 is curved downward and deformed by the curvature deformation of the light guide 112.

Because of this, the central portion of the metal plate 23 abuts on the contact portion 22, thereby allowing the contact portion 22 and the contact portion 26 to be electrically connected to each other.

On the other hand, when the light guide 112 is not pressed, the thickness of the light guide 112 is not particularly limited as long as the width of the gap 114 provided between the light guide 112 and the sheet switch 20 can be constantly maintained.

That is, the thickness thereof is not particularly limited within a range in which the light guide 112 and the sheet switch 20 are not in contact with each other. However, in terms of the reduction in the thickness of the sheet switch module 110, the thickness of the light guide 12 is preferably 0.1 to 0.2 mm.

The material constituting the light shielding sheet 113 is not particularly limited as long as it is a light shielding material.

For example, a resin obtained by coloring one resin selected from a group consisting of a polyurethane-based resin, a polycarbonate-based resin, a silicon-based resin, a polystyrene-based resin, a polyimide-based resin, and the like is used as the material.

The hue of the light shielding sheet 113 is not particularly limited as long as it has a sufficient light shielding property, but a black color is preferable because it absorbs the light best and has a high light shielding property.

In addition, the thickness of the light shielding sheet 113 is not particularly limited, but it is preferable that the thickness thereof has such a light shielding property that can prevent the light which propagates through the inside of the first light guide region 112A and is emitted from the first inclined plane 112d of the first light guide region 112A from leaking to the outside of the sheet switch module 110 by the light shielding sheet 113.

As the first adhesive material 114 and the second adhesive material 116, an adhesive maintaining its own shape is used.

Such an adhesive includes an acrylic resin, a polyurethane resin, an epoxy resin, a urethane resin, a natural rubber-based adhesive, a synthetic rubber-based adhesive, or a double-sided tape that applies these resins or adhesive materials to both sides of the base made of a resin or paper.

In addition, the thicknesses of the first adhesive material 114 and the second adhesive material 116 are not particularly limited. However, in the state where the sheet switch module 110 is used, the thicknesses thereof are preferable when they are such a thickness that the light guide 112 and the sheet switch 20 are not in contact with each other, and are preferably 0.01 to 0.05 mm in terms of the reduction in the thickness of the sheet switch module 110.

The light extraction portion 118 formed on the back 112a of the first light guide region 112A includes uneven portion 118A formed on the back 112a of the first light guide region 112A made of a resin sheet.

The uneven portion 118A is formed in the required region of the back 112a of the light guide 112 in accordance with a key or a button attempted to be illuminated.

In the region where the uneven portion 118A is formed, the light propagating through the inside of the first light guide region 112A is emitted from the inside thereof to the back 112a of the first light guide region 112A.

When the emission light from the light source 111 is incident on the first end-face 112c of the first light guide region 112A, in the first light guide region 112A, the incident light is reflected between the back 112a and the surface 112b of the first light guide region 112A and propagates through the inside of the first light guide region 112A.

Since the uneven portion 118A and the like are formed in the required region of the back 112a of the first light guide region 112A, the light propagating through the inside of the first light guide region 112A leaks out from the uneven portion 118A.

Because of this, it is possible to emit the light from the light extraction portion 118 of the first light guide region 112A to the outside.

That is, it is possible to light up the light extraction portion 118 using the light propagating through the inside of the first light guide region 112A.

The uneven portion 118A constituting the light extraction portion 118 are extremely small dots formed on the back 112a of the first light guide region 112A.

These extremely small dots can be formed by printing methods such as a screen printing method, a gravure printing method, and a pad printing method.

The screen printing method is a method, as one type of stencil printing, of using a plate clad with a screen made of a chemical fiber to chemically produce a plate film on the screen, and then closing up membranes other than the required streaks and rubbing ink through holes in the plate film, to thereby perform printing on the printing surface of a substance to be printed which is installed below the plate.

Since the ink is extruded against the surface to be printed and is printed by penetrating through holes in the plate film of the screen, it is possible to form the uneven portion 118A having the required size.

Since the uneven portion 118A (light extraction portion 118) formed by the screen printing method can be perceived as numerals or characters, it is not necessary to provide operation keys on the back 112a of the first light guide region 112A.

Because of this, it is possible to considerably reduce the thickness of the sheet switch module 110.

Furthermore, it is possible to considerably reduce the thickness of the electronic device to which the sheet switch module 110 is applied.

In addition, according to the screen printing method, it is possible to form the uneven portion 118A (light extraction portion 118) having the desired hue by adjusting the ink.

Therefore, the sheet switch module 110 can be made excellent in design. Moreover, the electronic device to which the sheet switch module 110 is applied can be made excellent in design.

The gravure printing is a printing method of forming the uneven portion as mentioned below.

That is, using the plate of which a certain convex portion attempted to be printed is hollowed, ink is applied to the entirety of the plate by an appropriate method so that the ink gets into the hollow.

Thereafter, the surface of the plate is wiped off by a device called a doctor, and then extra ink is scraped off.

Because of this, only the ink in the hollow is left.

Thereafter, the ink is pushed against the surface to be printed and is transferred, and the uneven portion is formed by forming the swollen portion of the ink.

Since the shading of printing can be limited by the width of the hollow and the thickness of the ink, it is possible to form an exquisite uneven shape and to form the desired uneven portion 118A on the back 112a of the first light guide region 112A.

The gravure printing method can form extremely small uneven portion 118A compared to the screen printing method.

Therefore, it is possible to form such uneven portion 118A that cannot be perceived at first glance.

In addition, it is possible to form the uneven portion 118A (light extraction portion 118) having the desired hue by adjusting the ink or the printing plate.

Therefore, the sheet switch module 110 can be made excellent in design.

Furthermore, the electronic device to which the sheet switch module 110 is applied can be made excellent in design.

The pad printing is a method of forming the uneven portion as mentioned below.

That is, the ink is filled up in the concave portion of an intaglio plate, and the ink of the portion other than the concave portion is scraped away by a blade.

Thereafter, a pad made of silicon or the like is pushed against an intaglio to transfer the ink to the pad.

Thereafter, this pad is pushed against the printing surface of the substance to be printed, to thereby form the uneven portion.

Additionally, various shapes such as a spherical shape or a drum shape can be applied to the pad.

According to this method, since a three-dimensional shape can also be accurately transferred, it is possible to form the desired uneven portion 118A on the back 12a of the first light guide region 112A.

Among these printing methods, the screen printing method has an advantage that the printing plate is more inexpensive than that used in the gravure printing method, and that the degree of accuracy is higher than that in the pad printing method.

In addition, the screen printing method has an advantage in that the desired uneven portion can be formed by variously changing the printing plate and the ink, and an advantage that excellent reproducibility and mass production can be obtained.

In the sheet switch module 110, when an operator presses the light extraction portion 118 of the first light guide region 112A using an operating tool such as their fingertip or a pen, the metal plate 23 is curved downward and is deformed.

The central portion of the metal plate 23 abuts on the contact portion 22 by this deformation, thereby allowing the contact portion 22 and the contact portion 26 to be electrically connected to each other.

Therefore, according to the sheet switch module 110 of the present embodiment, it is possible to display the position of the switch module provided with the metal plate 23 using the light leaking from each of the light extraction portions 118.

In addition, the light extraction portion 118 is pressed using an operating tool such as one's fingers to deform the metal plate 23, whereby it is possible to perform the on/off (conduction and non-conduction) operations of each of the switch elements 30 by switching the electrical connection between the contact portion 22 and the contact portion 26.

In the present embodiment, since each of the light extraction portions 118 is disposed facing the metal plate 23, it is possible to deform the metal plate 23 by pressing the light extraction portion 118.

In the sheet switch module 110, the light guide 112 includes the first light guide region 112A and the second light guide region 112B which are disposed at a predetermined distance so that the first inclined plane 112d and the second inclined plane 112f face each other.

The angle θ₁ between the first inclined plane 112d of the first light guide region 112A and the surface 20a of the sheet switch 20 in the -Y direction is an acute angle.

The angle θ₂ between the second inclined plane 112f of the second light guide region 112B and the surface 20a of the sheet switch 20 in the +Y direction is also an acute angle.

The light shielding sheet 13 is disposed on the surface 112b of the light guide 112 so as to cover the first inclined plane 112d of the first light guide region 112A and the second inclined plane 112f of the second light guide region 112B.

Therefore, it is possible to prevent the light which propagates through the inside of the first light guide region 112A and is emitted from the first inclined plane 112d of the first light guide region 112A from being incident on the second inclined plane 112f of the second light guide region 112B.

At the same time, it is possible to prevent (shield) the light which propagates through the inside of the first light guide region 112A and is emitted from the first inclined plane 112d of the first light guide region 112A from leaking to the outside of the sheet switch module 110.

Therefore, when the emission light from the light source 111 is incident on the first end-face 112c of the first light guide region 112A, it is possible to light up only the light extraction portion 118 provided in the first light guide region 112A using the incident light.

In addition, the sheet switch 20 adheres to the first light guide region 112A with the first adhesive material 114 which is provided on the back 112a of the first light guide region 112A having a sheet shape and interposed therebetween.

Therefore, the gap 115 is provided between the first light guide region 112A and the sheet switch 20.

The sheet switch 20 adheres to the second light guide region 112B with the second adhesive material 116 which is provided on the back 112a of the second light guide region 112B having a sheet shape and interposed therebetween.

Therefore, the gap 117 is provided between the second light guide region 112B and the sheet switch 20.

Therefore, the light guide 112 and the sheet switch 20 are not in contact with each other.

That is, the back 112a and the surface 112b of the light guide 112 are not in contact with another member made of a resin, but is in contact with an air layer.

Therefore, in the first light guide region 112A, when the emission light from the light source 111 is incident on the first end-face 112c, the incident light propagates through the inside of the first light guide region 112A while being reflected between the back 112a of and the surface 112b of the first light guide region 112A, and thus the rate at which the light leaks out in the portion other than the light extraction portion 118 is small.

Therefore, the light incident on the first light guide region 112A from the light source 111 is emitted to the outside of the first light guide region 112A centered on the light extraction portion 118.

Therefore, the attenuation of the light propagating through the first light guide region 112A with the propagation can be suppressed to a minimum.

As a result, it is possible to guide the light of an amount sufficient to light up the light extraction portion 118 over the total length of the first light guide region 112A.

In addition, conventionally, it is necessary to provide a reflective member (reflective sheet) in the interface between the light guide and the sheet switch in order to return the light leaking out to the outside of the light guide to the inside of the light guide.

However, in the present embodiment, since the light guide 112 is not in contact with another member, it is not necessary to provide the conventional reflective member.

Therefore, it is possible to considerably reduce the thickness of the sheet switch module 110.

Furthermore, it is possible to considerably reduce the thickness of the electronic device to which the sheet switch module 110 is applied.

In addition, since the light extraction portion 18 is formed directly on the back 112a of the first light guide region 112A, the first light guide region 112A itself has a function of the operation key.

Therefore, it is not necessary to laminate the operation key on the light guide unlike a conventional manner, and thus it is possible to considerably reduce the thickness of the sheet switch module 110.

Furthermore, it is possible to considerably reduce the thickness of the electronic device to which the sheet switch module 110 is applied.

Moreover, the light extraction portion 118 is provided on the surface of the first light guide region 112A facing the sheet switch 20, that is, the back 112a of the first light guide region 112A.

Therefore, since the light extraction portion 118 is not exposed to the upper surface (surface) of the sheet switch module 110, the light extraction portion 118 is scarcely damaged, and as a result, it is possible to constantly maintain the brightness of the light emitted from the light extraction portion 118.

In addition, in the present embodiment, the sheet switch module 110 is shown by an example in which the light extraction portion 118 constituted by the uneven portion 118A is provided on the back 112a of the first light guide region 112A.

However, the sheet switch module of the present invention is not limited thereto.

In the sheet switch module of the present invention, the light extraction portion constituted by the uneven portion may be provided on the surface of the light guide.

That is, the light extraction portion constituted by the uneven portion may be provided on the surface on the side opposite to the surface of the light guide facing the sheet switch.

In addition, in the sheet switch module of the present invention, a protective film made of a light-transmissive resin may be provided so as to cover the light extraction portion provided on the back or the surface of the light guide by a printing method, or the like.

The light extraction portion is scarcely damaged by this protective film.

In addition, in the present embodiment, the sheet switch module 110 is shown by an example in which the light source 111 is disposed close to the first end-face 112c of the first light guide region 112A.

However, the sheet switch module of the present invention is not limited thereto.

In the sheet switch module of the present invention, the light source may also be disposed close to the second end-face 112e of the second light guide region, to thereby cause the light to be incident on the second light guide region from this light source.

Hereinafter, the relationship between the distance of the slit 130 in the Y direction, the end-face angle of the slit 130, and the light-shielding ratio will be described.

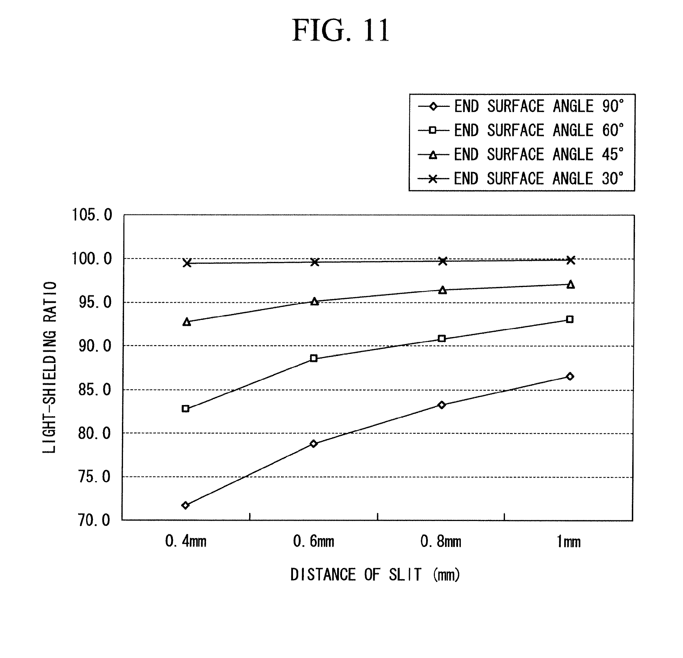

FIG. 11 is a graph for explaining a relationship between the distance of the slit in the sheet switch module, the end-face angle of the slit, and the light-shielding ratio.

First, the light guide 112 made of a urethane resin is prepared.

The thickness of the light guide 112 in the Z direction is 0.2 mm, and the length thereof in the Y direction is 50 mm.

The slit 130 penetrating through the light guide 112 in the Z direction is formed.

The relationship between the slit distance, the end-face angle, and the light-shielding ratio is measured by changing the width (slit distance) of the slit 130 in the Y direction and the end-face angle of the slit 130.

Here, the slit distance is an average value of the width of the slit 130 in the surface 112b of the light guide 112 and the width thereof in the back of the light guide 112.

The end-face angle is an angle between the inclined plane of the slit and the board.

That is, the end-face angle is the angle θ₁ between the first inclined plane 112d and the board 25 which is described previously.

Here, the angle θ₁ between the first inclined plane 112d and the board 25 and the angle θ₂ between the second inclined plane 112f and the board 25 are the same as each other.

Here, the light-shielding ratio is indicative of a rate at which the light is shielded by the slit after the formation of the slit as compared with before the formation of the slit.

Specifically, before the slit is formed in the light guide, the amount (Q₀) of the light emitted from the second end-face 112e is measured.

Thereafter, the slit is formed in the light guide, and the amount (Q₁) of the light emitted from the second end-face 112e through the slit is measured.

Thereafter, it is possible to calculate the light-shielding ratio (Q₁/Q₀) by calculating the ratio of the light amount (Q₁) after the formation of the slit to the light amount (Q₀) before the formation of the slit.

As shown in the following Table 4, with respect to the sheet switch module 110 according to the seventh embodiment, the light-shielding ratio is measured in the conditions in which the end-face angle of the slit is 30°, 45°, and 60°, and 90°, respectively, and the slit distance is 0.4 mm, 0.6 mm, 0.8 mm, and 1.0 mm, respectively.

The results are also shown in Table 4.

**[Table 4]**

| End-face angle [°] | Slit distance [mm] | | | |
|---|---|---|---|---|
| | 0.4 mm | 0.6 mm | 0.8 mm | 1.0 mm |
| 90° | 71.70% | 78.80% | 83.30% | 86.60% |
| 60° | 82.70% | 88.50% | 90.80% | 93.00% |
| 45° | 92.70% | 95.10% | 96.50% | 97.10% |
| 30° | 99.40% | 99.70% | 99.80% | 99.80% |

As shown in Table 4 and FIG. 11, as the end-face angle of the slit 130 becomes smaller, the light-shielding ratio becomes higher, and as the slit distance becomes longer, the light-shielding ratio becomes higher.

Specifically, for example, when the light-shielding ratio of 90% or more by the slit 130 is desired, the end-face angle of the slit 130 is preferably set to 45° or less.

Furthermore, when complete shielding of the light by the slit 130 is desired, the end-face angle thereof is preferably set to 30° or less.

As mentioned above, it is possible to adjusting the light-shielding ratio by adjusting the end-face angle of the slit, that is, the inclination angle of the inclined plane of the light guide.

It is possible to adjust the gradation of the brightness of the first light guide region and the second light guide region by adjusting the end-face angle of the slit.

Additionally, it is also possible to block the light from the first light guide region to the second light guide region by adjusting the end-face angle of the slit.

Similarly, it is possible to adjust the gradation of the brightness of the first light guide region and the second light guide region or the blocking of the light by adjusting the distance (width) of the slit 130 in the Y direction.

Moreover, it is also possible to adjust the gradation of the brightness of the first light guide region and the second light guide region or the blocking of the light by adjusting the distance of the slit 130 in the Y direction and the end-face angle in combination thereof.

### <Eighth Embodiment>

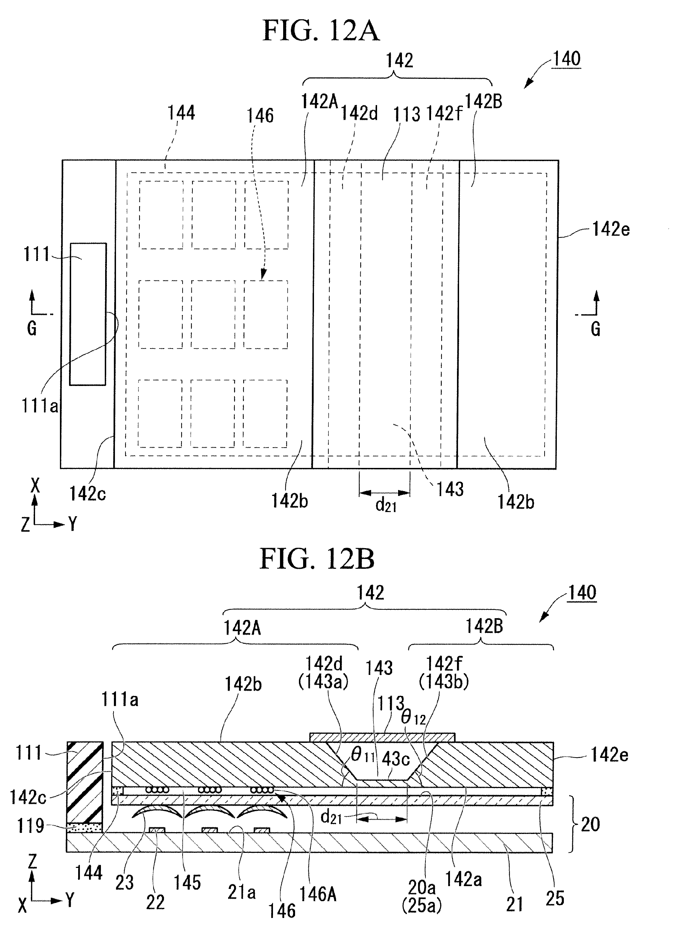

FIG. 12A is a schematic diagram (plan view) showing the sheet switch module according to an eighth embodiment of the present invention.
FIG. 12B is a cross-sectional view taken along the G-G line of FIG. 12A.

In FIGS. 12A and 12B, the same components as those of the seventh embodiment shown in FIGS. 10A and 10B are denoted by the same reference signs, and the description thereof will be omitted.

A sheet switch module 140 of the present embodiment includes the light source 111, a sheet-shaped light guide 142. the sheet switch 20 disposed on the back (lower surface) 142a side of the light guide 142, and the light shielding sheet 113 disposed on the surface (upper surface) 142b of the light guide 142.

The light guide 142 is formed in a rectangular shape when seen in a plan view (X-Y plane) of FIG. 12A.

Furthermore, the light guide 142 is disposed close to the emission surface 111a of the light source 111.

That is, as shown in FIG. 12B, the light source 111 and the light guide 142 are disposed along the Y direction.

As shown in FIG. 12B, a groove 143 opening toward the +Z direction is provided on the surface 142b of the light guide 142.

In the present embodiment, the groove 143 forms a trapezoidal shape in the Y-Z cross-section.

That is, the groove 143 has a plane inclined on the Y-Z plane.

More specifically, as shown in FIG. 12B, the groove 143 includes a first inner side 143a inclined in the +Y direction, a second inner side 143b inclined in the-Y direction, and a bottom 143c.

The width of the bottom 143c in the Y direction is smaller than that of the opening of the groove 143 on the surface 142b side of the light guide 142 due to the first inner side 143a and the second inner side 143b.

The light guide 142 is divided into a first light guide region 142A on the side close to the light source 111 and a second light guide region 142B on the side away from the light source 111, with the groove 143 interposed therebetween.

A first inclined plane 142d is formed on the first light guide region 142A of the light guide 142 by the groove 143, and a second inclined plane 142fis formed on the second light guide region 142B thereby.

In other words, the first inner side 143a of the groove 143 and the first inclined plane 142d of the first light guide region 142A are coplanar, and the second inner side 143b of the groove 143 and the second inclined plane 142f of the second light guide region 142B are coplanar.

The first inclined plane 142d of the first light guide region 142A and the second inclined plane 142f of the second light guide region 142B are disposed facing each other.

Additionally, the first light guide region 142A and the second light guide region 142B are sometimes referred to as the light guide 142 collectively.

In addition, the angle between (end-face angle) the first inclined plane 142d of the first light guide region 142A and the surface 25a of the press sheet 25 constituting the sheet switch 20 is represented as an angle θ₁₁.

That is, the angle between (end-face angle) the first inclined plane 142d and the surface 20a of the sheet switch 20 is the angle θ₁₁.

As shown in FIG. 12B, the angle θ₁₁ between the first inclined plane 142d and the surface 25a of the press sheet 25 in the -Y direction is an acute angle.

In addition, the angle between the second inclined plane 142f of the second light guide region 142B and the surface 25a of the press sheet 25 constituting the sheet switch 20 is represented as an angle θ₁₂.

That is, the angle between (end-face angle) the second inclined plane 142f and the surface 20a of the sheet switch 20 is the angle θ_{12.}

As shown in FIG. 12B, the angle θ₁₂ between the second inclined plane 142f and the surface 25a of the press sheet 25 in the +Y direction is an acute angle.

Furthermore, the light shielding sheet 113 is disposed on the surface 142b of the light guide 142 so as to cover the groove 143.

Specifically, the light shielding sheet 113 is disposed over the first light guide region 142A and the second light guide region 142B so as to cover the first inclined plane 142d of the first light guide region 142A and the second inclined plane 142f of the second light guide region 142B.

The light source 111 is disposed close to the first end-face 142c of the first light guide region 142A.

The light from the light source 111 is incident on the first light guide region 142A.

The sheet switch 20 adheres to the back 142a of the light guide 142 with a frame-shaped adhesive material 144 interposed therebetween.

As shown in FIG. 12B, the adhesive material 144 is provided in the periphery of the back 142a of the light guide 142.

Because of this, a gap 145 is provided between the light guide 142 and the sheet switch 20.

That is, the light guide 142 and the sheet switch 20 are not in contact with each other, but are disposed facing each other at a distance corresponding to the thickness of the adhesive material 144.

The thickness of the gap 145 provided between the light guide 142 and the sheet switch 20, that is, the distance between the light guide 142 and the sheet switch 20 is not particularly limited.

For example, in the state where the sheet switch module 140 is used, the distance between the light guide 142 and the sheet switch 20 is not limited as long as the light guide 142 and the sheet switch 20 are not in contact with each other.

In terms of the reduction in the thickness of the sheet switch module 140, the distance between the light guide 142 and the sheet switch 20 is preferably 0.01 to 0.05 mm.

In the sheet switch module 140, the light emitted from the light source 111 is incident on the first end-face 142c of the first light guide region 142A.

The incident light propagates through the inside of the first light guide region 142A.

The incident light is emitted from the first inclined plane 142d of the first light guide region 142A to the outside.

In this case, it is necessary for the emission light from the first inclined plane 142d not to be incident on the second inclined plane 142f of the second light guide region 142B.

Therefore, it is necessary to appropriately adjust the angle θ₁₁ and the angle θ₁₂ so that the emission light from the first inclined plane 142d is not incident on the second inclined plane 142f.

Among them, the angle between the first inclined plane 142d (first inner side 143a of the groove 143) of the first light guide region 142A and the surface 25a of the press sheet 25 constituting the sheet switch 20 in the -Y direction is the angle θ₁₁.

Additionally, the angle between the second inclined plane 142f (second inner side 143b of the groove 143) of the second light guide region 142B and the surface 25a of the press sheet 25 constituting the sheet switch 20 in the +Y direction is angle θ₁₂.

Specifically, in order that the emission light from the first inclined plane 142d of the first light guide region 142A is not incident on the second inclined plane 142f of the second light guide region 142B, the angle θ₁₁ and the angle θ₁₂ are preferably 20 to 30°, and are more preferably 25 to 30°.

When the angle θ₁₁ and the angle θ₁₂ are less than 20°, there may be a case in which the thickness of the light guide 142 becomes excessively small, and thus drawbacks occur when the light emitted from the light source 111 is caused to propagate through the inside of the first light guide region 142A.

On the other hand, when the angle θ₁₁ and the angle θ₁₂ exceed 30° the emission light from the first inclined plane 142d of the first light guide region 142A is incident on the second inclined plane 142f of the second light guide region 142B.

In addition, the distance d₂₁ of the groove 143 in the Y direction is not particularly limited as long as the angle θ₁₁ and the angle θ₁₂ mentioned above are within a predetermined range, but it is preferably equal to or more than 0.4 mm, and more preferably equal to or more than 0.6 mm.

When the distance d₂₁ of the groove 143 in the Y direction is less than 0.4 mm, there is a possibility that the emission light from the first inclined plane 142d of the first light guide region 142A may be incident on the second inclined plane 142f of the second light guide region 142B.

Here, the distance d₂₁ of the groove 143 in the Y direction is a distance between the end of the first inclined plane 142d (first inner side 143a of the groove 143) of the first light guide region 142A facing the surface 20a (surface 25a of the press sheet 25) of the sheet switch 20 and the end of the second inclined plane 142f (second inner side 143b of the groove 143) of the second light guide region 142B facing the surface 20a (surface 25a of the press sheet 25) of the sheet switch 20.

As shown in FIG. 12B, the sheet switch 20 is disposed facing the back 142a side of the first light guide region 142A.

Furthermore, a plurality of light extraction portions 146 constituted by uneven portion 146A is formed in a predetermined position on the back 142a of the first light guide region 142A.

Additionally, light extraction portions 146 are aligned when seen in a plan view (X-Y plane) with respect to pressure-sensitive switch elements 30 constituting the sheet switch 20.

That is, the light extraction portion 146 is disposed so as to face the metal plate 23 of each of the switch elements 30.

As the light guide 142, the same light guide as that of the above-mentioned embodiment is used.

As the adhesive material 144, the same adhesive material as that of the above-mentioned embodiment is used.

As the light extraction portion 146, the same light extraction portion as that of the above-mentioned embodiment is formed.

In the sheet switch module 140, the light guide 142 is divided into the first light guide region 142A and the second light guide region 142B with the groove 143 interposed therebetween.

The first inclined plane 142d of the first light guide region 142A and the second inclined plane 142f of the second light guide region 142B are disposed facing each other.

The angle θ₁₁ between the first inclined plane 142d of the first light guide region 142A and the surface 20a of the sheet switch 20 in the -Y direction is an acute angle.

Moreover, the angle θ₁₂ between the second inclined plane 142f of the second light guide region 142B and the surface 20a of the sheet switch 20 in the +Y direction is an acute angle.

The light shielding sheet 113 that covers the first inclined plane 142d of the first light guide region 142A and the second inclined plane 142f of the second light guide region 142B is disposed on the surface 142b of the light guide 142.

Therefore, it is possible to adjust the amount of the light, which propagates through the inside of the first light guide region 142A and is emitted from the first inclined plane 142d of the first light guide region 142A, incident on the second inclined plane 142f of the second light guide region 142B.

Furthermore, it is possible to prevent the light emitted from the first inclined plane 142d from being incident on the second inclined plane 142f of the second light guide region 142B.

At the same time, it is possible to prevent (shield) the light which propagates through the inside of the first light guide region 142A and is emitted from the first inclined plane 142d of the first light guide region 142A from leaking to the outside of the sheet switch module 140.

Therefore, when the emission light of the light source 111 is incident on the first end-face 142c of the first light guide region 142A, it is possible to light up only the light extraction portion 146 provided in the first light guide region 142A using the incident light.

Additionally, in the present embodiment, the sheet switch module 140 is shown by an example in which the light extraction portion 146 constituted by the uneven portion 146A is provided on the surface 142a of the first light guide region 142A.

However, the sheet switch module of the present invention is not limited thereto.

In the sheet switch module according to the present invention, the light extraction portion constituted by the uneven portion may be provided on the surface of the light guide, that is, the surface on the side opposite to the surface of the light guide facing the sheet switch.

In addition, in the present embodiment, the sheet switch module 140 is shown by an example in which the light source 111 is disposed close to the first end-face 142c of the first light guide region 142A.

However, the sheet switch module of the present invention is not limited thereto.

In the sheet switch module of the present invention, the light source may be also disposed close to the second end-face 142e of the second light guide region 142, to thereby cause the light to be incident on the second light guide region from this light source.

### <Ninth Embodiment>

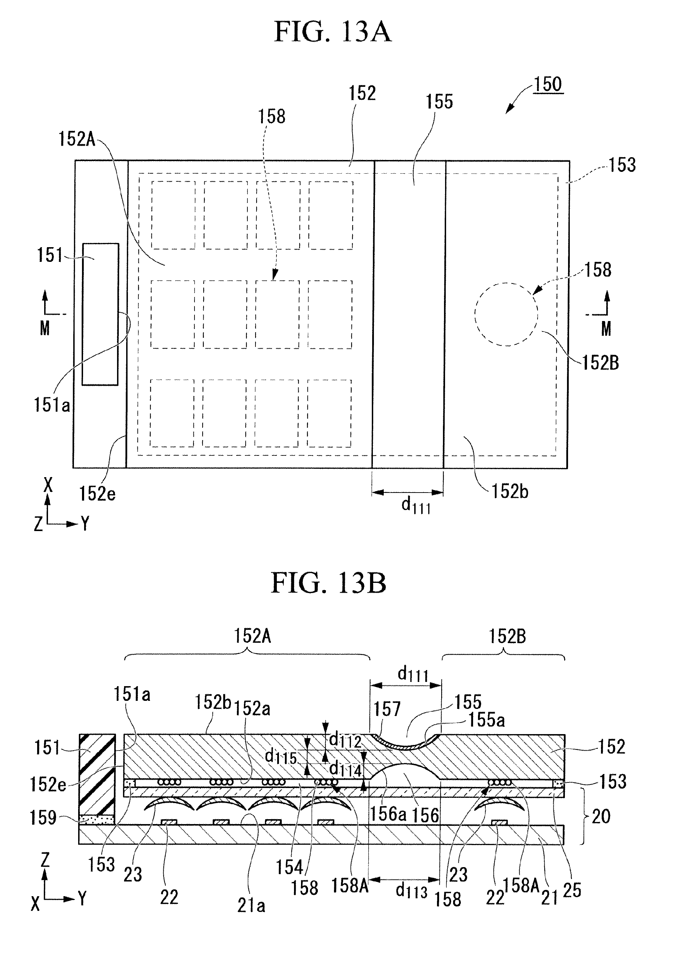

FIG. 13A is a schematic diagram (plan view) showing the sheet switch module according to a ninth embodiment of the present invention.
FIG. 13B is a cross-sectional view taken along the M-M line of FIG. 13A.

In FIGS. 13A and 13B, the same components as those of the sheet switch module 10 shown in FIGS. 1A and 1B are denoted by the same numerals and signs, and the description thereof will be omitted.

As shown in FIGS. 13A and FIG. 13B, a sheet switch module 150 of the present embodiment is roughly constituted by a light source 151, a sheet-shaped light guide 152, and the sheet switch 20 disposed on the back (lower surface) 152a side of the light guide 152.

The light guide 152 is disposed close to the emission surface 11a of the light source 151.

The light guide 152 is formed in a rectangular shape when seen in a plan view (X-Y plane) of FIG. 13A.

The light source 151 is disposed close to a first end-face 152e of a first light guide region 152A of the light guide 152.

Light from the light source 151 is incident on the first light guide region 152A.

The sheet switch 20 adheres to the back 152a of the light guide 152 with a frame-shaped adhesive material 153 interposed therebetween.

The adhesive material 153 is provided in the periphery of the back 152a of the light guide 152.

Because of this, a gap 154 is provided between the light guide 152 and the sheet switch 20.

That is, the light guide 152 and the sheet switch 20 are not in contact with each other, but are disposed facing each other at a distance corresponding to the thickness of the adhesive material 153.

The thickness of the gap 154 provided between the light guide 152 and the sheet switch 20, that is, the distance between the light guide 152 and the sheet switch 20 is not particularly limited.

For example, in the state where the sheet switch module 150 is used, the distance between the light guide 152 and the sheet switch 20 is preferably such a distance that the light guide 152 and the sheet switch 20 are not in contact with each other.

In terms of the reduction in the thickness of the sheet switch module 150, the distance between the light guide 152 and the sheet switch 20 is preferably 0.01 to 0.05 mm.

The light guide 152 is provided with a first groove 155 concaved in the -Z direction and a second groove 156 concaved in the +Z direction.

In addition, the first groove 155 and the second groove 156 are disposed facing each other to form a pair.

The first groove 155 and the second groove 156 extend in the thickness direction (Z direction) perpendicular to the longitudinal direction (Y direction) of the light guide 152.

The first groove 155 is hollowed in the -Z direction (thickness direction) from the surface 152b (surface on the side opposite to the back 152a) of the light guide 152.

The second groove 156 is hollowed in the +Z direction (thickness direction) from the back 152a of the light guide 152.

In addition, this pair of first groove 155 and second groove 156 forms an arc-shaped cross-sectional shape on the Y-Z plane of the light guide 152.

That is, it has an arc-shaped cross-sectional shape along the longitudinal direction of the light guide 152.

In addition, a colored layer 157 is provided along the inner surface 155a of the first groove 155.

Additionally, the colored layer 157 may be provided along the inner surface 156a of the second groove 156.

Moreover, the cross-sectional shape of the first groove 155 and the cross-sectional shape of the second groove 156 may be equal to each other or may be different from each other.

The width d₁₁₁ of the first groove 155 and the width d₁₁₃ of the second groove 156 in the Y direction are not particularly limited, but are preferably 0.4 to 0.8 mm, in terms of dealing with the miniaturization of the sheet switch module and the adjustment of the amount of the light propagating through the inside of the light guide 152 by the first groove 155 and the second groove 156, described later, at the same time.

In addition, the width d₁₁₁ of the first groove 155 and the width d₁₁₃ of the second groove 156 may be equal to each other or may be different from each other.

The depth d₁₁₂ of the first groove 155 and the depth d₁₁₄ of the second groove 156 in the Z direction are not particularly limited, and they may be equal to each other or may be different from each other.

In addition, the sum of the depth d₁₁₂ of the first groove 155 and the depth d₁₁₄ of the second groove 156 is equivalent to, for example, the depth d₂ of the groove 15 in the above-mentioned embodiment.

Therefore, it is possible to adjust the ratio of the groove to the thickness of the light guide 152 by adjusting the sum of the depth d₁₁₂ of the first groove 155 and the depth d₁₁₄ of the second groove 156.

The curvature of the first groove 155 and the curvature of the second groove 156 are not particularly limited, and they may be equal to each other or may be different from each other.

In addition, the light guide 152 is divided into two regions using a pair of first groove 155 and second groove 156 as a boundary.

That is, as shown in FIG. 13B, the light guide 152 is divided into the first light guide region 152A and the second light guide region 152B with a pair of first groove 155 and second groove 156 interposed therebetween.

In the sheet switch module 150, the light emitted from the light source 151 is incident on the first end-face 152e of the light guide 152.

The incident light propagates through the inside of the light guide 152.

A portion of the incident light is emitted from the first groove 155 to the colored layer 157 side, the light is absorbed into the colored layer 157, and the remaining light is reflected in the interface (inner surface 155a of the first groove 155) between the first groove 155 and the external space and propagates from the first light guide region 152A to the second light guide region 152B.

Alternatively, the entirety of the incident light is emitted from the first groove 155 to the colored layer 157 side, and is absorbed into the colored layer 157.

Therefore, it is possible to appropriately adjust the width d₁₁₁, the depth d₁₁₂ or the curvature of the first groove 155 in accordance with the amount of the light emitted from the first groove 155 to the colored layer 157 side or the angle at which the light is emitted.

In other words, it is possible to adjust the amount of the light emitted to the colored layer 157 side or the light emitting angle by adjusting the width d₁₁₁, the depth d₁₁₂ or the curvature of the first groove 155.

In addition, in the sheet switch module 150, the light which is incident on the first end-face 152e of the light guide 152 from the light source 151 propagates through the inside of the light guide 152.

A portion of the incident light is emitted from the second groove 156 to the outside, and the remaining incident light is reflected in the interface (inner surface 156a of the second groove 156) between the second groove 156 and the external space and propagates from the first light guide region 152A to the second light guide region 152B.

Alternatively, the entirety of the incident light is emitted from the second groove 156 to the outside.

Therefore, the width d₁₁₃. the depth d₁₁₄ or the curvature of the second groove 156 is appropriately adjusted in accordance with the amount of the light emitted from the second groove 156 to the outside or the angle at which the light is emitted.

In other words, it is possible to adjust the amount of the light emitted from the second groove 156 or the light emitting angle by adjusting the width d₁₁₃, the depth d₁₁₄ or the curvature of the second groove 156.

The distance d₁₁₅ between the first groove 155 and the second groove 156 in the Y direction is preferably equal to or less than 30% of the thickness of the light guide 152, and is more preferably equal to or less than 20% thereof.

Here, the distance d₁₁₅ between the first groove 155 and the second groove 156 means a distance between the bottom (the deepest portion of the first groove 155) of the first groove 155 and the bottom (the deepest portion of the second groove 156) of the second groove 156.

When the distance d₁₁₅ between the first groove 155 and the second groove 156 exceeds 30% of the thickness of the light guide 152, it is necessary to increase the width d₁₁₁ of the first groove 155 and the width d₁₁₃ of the second groove 156 in order to adjust the amount of the light propagating through the inside of the light guide 152, and thus there may be a case in which the miniaturization of the sheet switch module is obstructed.

The hue of the colored layer 157 is not particularly limited as long as it has a sufficient light shielding property, but a black color is preferable because it absorbs the light best and has a high light shielding property.

The thickness of the colored layer 157 is not particularly limited as long as it has a sufficient light shielding property.

The sheet switch 20 is disposed facing the back of the light guide 152.

In addition, light extraction portions 158 are formed in a predetermined position on the back 152a on the light guide 152.

Furthermore, light extraction portions 158 are aligned when seen in a plan view (X-Y plane) with respect to a plurality of pressure-sensitive switch elements 30 constituting the sheet switch 20.

That is, the light extraction portion 158 is disposed so as to face the metal plate 23 of each of the switch elements 30.

As the material constituting the light source 151, the light guide 152, the adhesive material 153 and the colored layer 157, the same material as that in the above-mentioned embodiment is used.

The light extraction portion 158 formed on the back 152a of the light guide 152 is the same as that in the above-mentioned embodiment.

In the sheet switch module 150, the light guide 152 is divided into the first light guide region 152A and the second light guide region 152B.

The first groove 155 and the second groove 156 are provided between these two regions.

The first groove 155 extends in the thickness direction perpendicular to the longitudinal direction of the light guide 152, and is hollowed in the thickness direction from the surface 152b of the light guide 152.

The second groove 156 is hollowed in the thickness direction from the back 152a of the light guide 152.

Moreover, the colored layer 157 is provided along the inner surface 155a of the first groove 155.

Therefore, when the emission light from the light source 151 is incident on the first end-face 152e of the light guide 152, it is possible to light up the light extraction portion 158 provided in the first light guide region 152A of the light guide 152 using the incident light.

At the same time, a portion or the entirety of the light propagating through the inside of the first light guide region 152A of the light guide 152 is emitted from the first groove 155 to the colored layer 157 side.

When a portion of the light is emitted to the colored layer 157 side, the light is absorbed into the colored layer 157, and thus it is possible to prevent the light from being emitted to the outside.

Because of this, it is possible to prevent the first groove 155 which is not required to emit light from emitting light.

In addition, when the light (remaining light), emitted from the first groove 155 to the colored layer 157 side, in the light propagating through the inside of the first light guide region 152A of the light guide 152 is reflected in the interface (inner surface 155a of the first groove 155) between the first groove 155 and the external space, the light propagates from the first light guide region 152A to the second light guide region 152B, thereby allowing the light extraction portion 158 provided in the second light guide region 152B to be lit up.

In this case, the amount of the light reflected in the interface between the first groove 155 and the external space is reduced further than the amount of the emission light from the light source 151. Therefore, in the first light guide region 152A and the second light guide region 152B, the amounts of the propagating light are different from each other, and the brightnesses of the regions lit up by the light are also different from each other.

Similarly, a portion or the entirety of the light propagating through the inside of the first light guide region 152A of the light guide 152 is emitted from the second groove 156 to the outside.

When a portion of the light is emitted from the second groove 156 to the outside and the remaining light is reflected in the interface (inner surface 166a of the second groove 156) between the second groove 156 and the external space, the reflected light propagates from the first light guide region 152A to the second light guide region 152B, thereby allowing the light extraction portion 158 provided in the second light guide region 152B to be lit up.

In this case, the amount of the light reflected in the interface between the second groove 156 and the external space is reduced further than the amount of the emission light from the light source 151. Therefore, in the first light guide region 152A and the second light guide region 152B, the amounts of the propagating light are different from each other, and the brightnesses of the regions lit up by the light are also different from each other.

In addition, when the entirety of the light propagating through the inside of the first light guide region 152A of the light guide 152 from the second groove 156 is emitted to the outside, there is no case in which the light extraction portion 158 provided in the second light guide region 152B is lit up by the emission light from the light source 151.

From the above, gradation is added to the brightness of the light extraction portion 158 provided in the first light guide region 152A and the light extraction portion 158 provided in the second light guide region 152B by one light source 151, and thus it is possible to light up the light extraction portion 158 provided in each of the regions.

On the other hand, when the entirety of the light propagating through the inside of the first light guide region 152A of the light guide 152 from the first groove 155 is emitted to the colored layer 157 side, or when the entirety of the light propagating through the inside of the first light guide region 152A of the light guide 152 from the second groove 156 is emitted to the outside, there is no case in which the light extraction portion 158 provided in the second light guide region 152B is lit up by the emission light from the light source 151.

Additionally, it is possible to control the amount of the light emitted from the first groove 155 to the colored layer 157 side by appropriately adjusting the width d₁₁₁, the depth d₁₁₂ or the curvature of the first groove 155.

In addition, it is possible to control the amount of the light emitted from the second groove 156 to the outside by appropriately adjusting the width d₁₁₃, the depth d₁₁₄ or the curvature of the second groove 156.

Moreover, in the present embodiment, the light guide 152 is divided into the first light guide region 152A and the second light guide region 152B.

The sheet switch module 150 is shown by an example in which the first groove 155 concaved in the thickness direction with respect to the surface 152b of the light guide 152 is provided and the second groove 156 concaved in the thickness direction with respect to the back 152a thereof is provided, each of the grooves extending in the thickness direction perpendicular to the longitudinal direction of the light guide 152 between the first light guide region 152A and the second light guide region 152B, and the first groove 155 and the second groove 156 are disposed facing each other to form a pair.

However, the sheet switch module of the present invention is not limited thereto.

In the sheet switch module of the present invention, the light guide may be divided into three or more regions having an arbitrary shape. When the grooves are provided in both sides of the light guide between each of the regions and these grooves are disposed facing each other to form a pair, the width, the depth or the curvature of each of the grooves may be appropriately adjusted in accordance with the shape of each of the regions.

In addition, in the present embodiment, the sheet switch module 150 is shown by an example in which the colored layer 157 is provided along the inner surface 155a of the first groove 155 of the light guide 152.

However, the sheet switch module of the present invention is not limited thereto.

In the sheet switch module of the present invention, a colored layer may be formed by filling a coating material having a light shielding property in the inside of the groove of the light guide.

In addition, in the sheet switch module of the present invention, the insides of all the grooves provided in both sides of the light guide may be colored.

In addition, in the sheet switch module of the present invention, similarly to the above-mentioned sheet switch modules 50, 110, and 140, the light shielding sheet may be disposed so as to cover the grooves provided in each of the surfaces on the back and/or the surface of the light guide.

In addition, in the present embodiment, the sheet switch module 150 is shown by an example in which the light extraction portion 158 constituted by uneven portion 158A is provided on the back 152a of the light guide 152.

However, the sheet switch module of the present invention is not limited thereto. In the sheet switch module of the present invention, a light extraction portion constituted by uneven portion may be provided on the surface of the light guide, that is, the surface on the side opposite to the surface of the light guide facing the sheet switch.

In addition, in the sheet switch module of the present invention, a protective film made of a light-transmissive resin may be provided so as to cover the light extraction portion provided on the surface or the back of the light guide by a printing method.

The light extraction portion is scarcely damaged by this protective film.

Furthermore, in the sheet switch module of the present invention, the groove is not limited to only a groove having an arc-shaped cross-sectional shape, but a groove having a trapezoidal cross-sectional shape shown in FIG. 12B may be formed.

In this case, similarly to the above-mentioned embodiment, it is possible to adjust the amount of the light emitted from the inclined plane or the emitting angle by adjusting the angle between the inclined plane of the groove having a trapezoidal shape and the board.

### <A Sheet Switch Module Manufacturing Method>

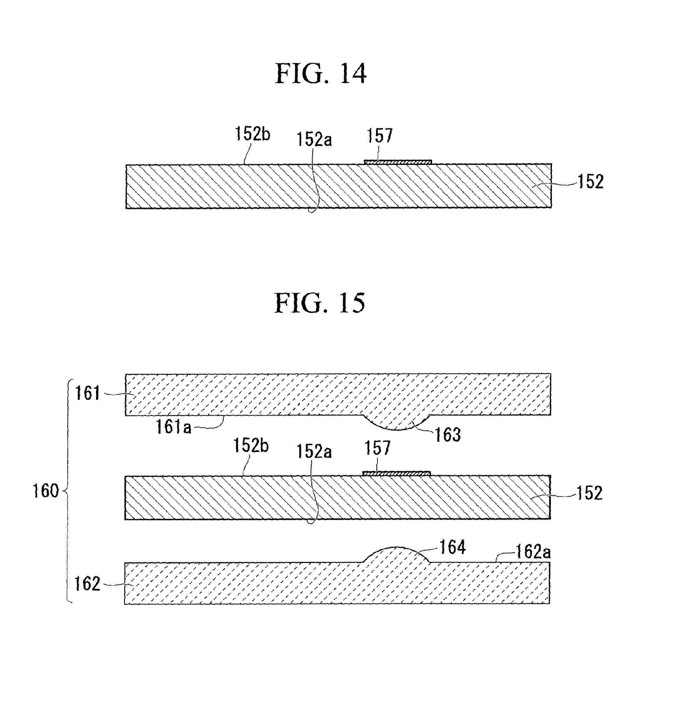

Next, reference will be made to FIGS. 14 to 19 to describe a sheet switch module manufacturing method of the present embodiment.

First, as shown in FIG. 14, the colored layer 157 made of a coating material having a light shielding property or a light shielding sheet is formed on the surface 152b of the light guide 152 made of a sheet-shaped resin by applying a coating material having a light shielding property using printing, or by attaching a light shielding sheet (colored layer forming step).

In the colored layer forming step, the colored layer 157 is formed in a position in which the first groove 155 is provided in a later-stage step.

That is, the colored layer 157 is formed on the surface 152b of the light guide 152 so as to extend in the longitudinal direction (Y direction) of the light guide 152.

Next, as shown in FIG. 15, the first groove 155 is formed on the surface 152b of the light guide 152 and the second groove 156 is formed on the back 152a of the light guide 152, by a hot press molding method in which a mold 160 constituted by an upper mold 161 and a lower mold 162 is used (groove forming step).

A semi-circular protruding portion 163 is provided on a surface 161 a facing the light guide 152 of the upper mold 161.

The protruding portion 163 extends in a direction (Z direction) perpendicular to the longitudinal direction of the upper mold 161, and has a semi-circular shape on the cross-sectional surface perpendicular to the longitudinal direction of the upper mold 161.

The shape and the size of the semi-circular protruding portion 163 correspond to the shape and the size of the first groove 155.

In addition, a semi-circular protruding portion 164 is provided on a surface 162a facing the light guide 152 of the lower mold 162.

The protruding portion 164 extends in a direction perpendicular to the longitudinal direction of the lower mold 162, and has a semi-circular shape on the cross-sectional surface perpendicular to the longitudinal direction of the lower mold 162.

The shape and the size of the semi-circular protruding portion 164 correspond to the shape and the size of the second groove 156.

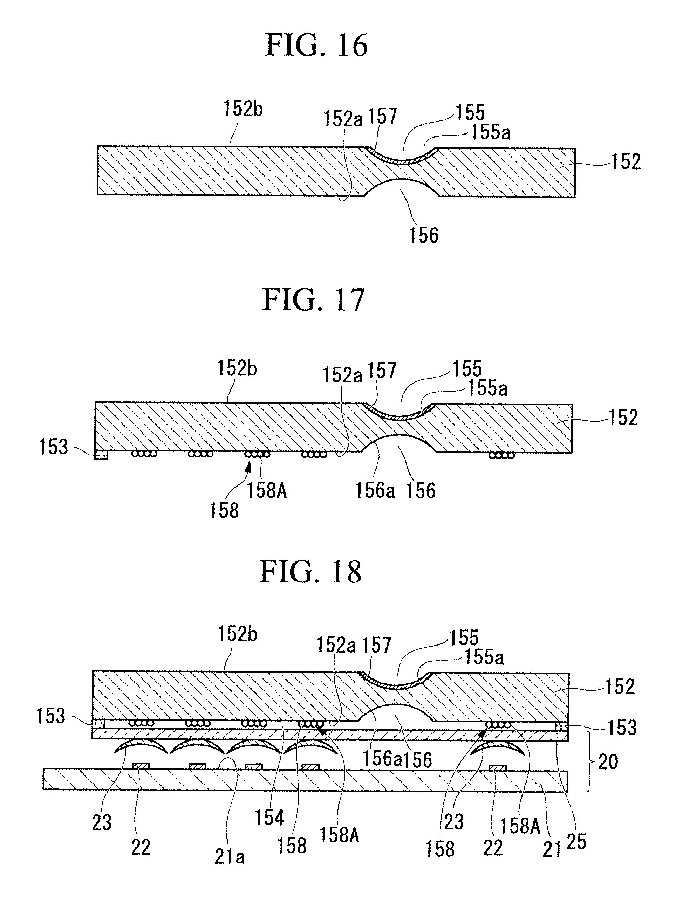

Particularly, in the groove forming step, the surface 152b of the light guide 152 and the colored layer 157 provided on the surface 152b are pressed in the thickness direction of the light guide 152 by the protruding portion 163 of the upper mold 161 heated to the melting temperature or higher of a resin constituting the light guide 152, and extend in the thickness direction perpendicular to the longitudinal direction of the light guide 152 as shown in FIG. 16, to thereby form the first groove 155 which is hollowed in the thickness direction from the surface 152b of the light guide 152.

At the same time, the colored layer 157 having the same thickness is provided along the inner surface 155a of the first groove 155.

In addition, the shape of the first groove 155 obtained becomes a shape in accordance with the shape of the protruding portion 163 of the upper mold 161.

Similarly, the back 152a of the light guide 152 is pressed in the thickness direction of the light guide 152 by the protruding portion 164 of the lower mold 162 heated to the melting temperature or higher of a resin constituting the light guide 152, and extends in the thickness direction perpendicular to the longitudinal direction of the light guide 152 as shown in FIG. 16, to thereby form the second groove 156 which is hollowed in the thickness direction from the back 152a of the light guide 152.

In addition, the shape of the second groove 156 obtained becomes a shape in accordance with the shape of the protruding portion 164 of the lower mold 162.

In addition, in the groove forming step, after the light guide 152 is pinched by a pair of heat insulating plates at the time of the hot press molding, these heat insulating plates are sandwiched between the upper mold 161 and the lower mold 162, so that the first groove 155 may be formed in the surface 152b of the light guide 152 by the protruding portion 163 of the upper mold 161, and the second groove 156 may be formed in the back 152a of the light guide 152 by the protruding portion 164 of the lower mold 162.

In this case, a pair of heat insulating plates pinches the light guide 152 so as not to cover regions, in which the first groove 155 and the second groove 156 are formed, in the light guide 152.

The heat insulating plate is not particularly limited as long as it can cause the heat of the mold 160 not to be transmitted directly to the light guide 152, but the heat insulating plate made of, for example, a glass epoxy is used.

In addition, the thickness of the heat insulating plate is not particularly limited as long as it can cause the heat of the mold 160 not to be transmitted directly to a region other than the regions, in which the first groove 155 and the second groove 156 are formed, in the light guide 152. The thickness thereof is appropriately adjusted in accordance with the processing temperature or the like of the light guide 152.

In this manner, it is possible to reduce the distortion generated in the light guide 152 by the heat at the time of the hot press molding by pinching the light guide 152 by a pair of heat insulating plates and performing the hot press molding on the light guide 152.

In addition, thereby, it is possible to reduce the misalignment at the time of the hot press molding, and to prevent the light guide 152 from being fused in the upper mold 161 and/or the lower mold 162.

Furthermore, since the light guide 152 is processed together with the heat insulating plate, the processing is facilitated when the light guide 152 is made of a material having tackiness.

In addition, the formation of the first groove 155 and the second groove 156 may be simultaneously performed, and may be separately performed.

When the first groove 155 and the second groove 156 are simultaneously formed, in the groove forming step, the upper mold 161 and the lower mold 162 are disposed facing each other so that the protruding portion 163 and the protruding portion 164 face each other with the light guide 152 interposed therebetween, and the first groove 155 and the second groove 156 are formed in the positions facing each other by sandwiching the light guide 152 between the upper mold 161 and the lower mold 162.

On the other hand, when the first groove 155 and the second groove 156 are separately formed, any one of the first groove 155 or the second groove 156 is formed, and then the other groove is formed in the position facing the previously formed groove.

In the groove forming step, the temperatures of the protruding portion 163 of the upper mold 161 and the protruding portion 164 of the lower mold 162 are appropriately adjusted in accordance with the type of a resin constituting the light guide 152, but are preferably higher than the melting temperature of the resin.

In addition, in the groove forming step, the pressure at which the colored layer 157 provided on the surface 152b of the light guide 152 is pressed by the protruding portion 163 of the upper mold 161 can be appropriately adjusted in accordance with the type of a resin constituting the light guide 152 and the type of a material constituting the colored layer 157.

Similarly, the pressure at which the back 152a of the light guide 152 is pressed by the protruding portion 164 of the lower mold 162 is appropriately adjusted in accordance with the type of a resin constituting the light guide 152.

The material of the mold 160 used in the groove forming step is not particularly limited, but a material is used that causes the size thereof not to easily change even when it is heated to a melting temperature or higher of a resin constituting the light guide 152, and has such a hardness that it is not deformed at the time of pressing the light guide 152. For example, dies steel SKd₁₁ is used as the material.

In addition, the shape of the protruding portion 163 of the upper mold 161 becomes a shape in accordance with the shape of the first groove 155 formed in the light guide 152, and the shape of the protruding portion 164 of the lower mold 162 becomes a shape in accordance with the shape of the second groove 156 formed in the light guide 152.

Next, as shown in FIG. 17, the light extraction portion 158 constituted by the uneven portion 158A is formed on the back 152a of the light guide 152 by the printing methods such as the screen printing method, the gravure printing method, and the pad printing method which are mentioned above.

Next, as shown in FIG. 18, the frame-shaped adhesive material 153 is provided in the periphery of the back 152a of the light guide 152, and the light guide 152 is caused to adhere onto the press sheet 25 of the sheet switch 20 with this adhesive material 153 interposed therebetween.

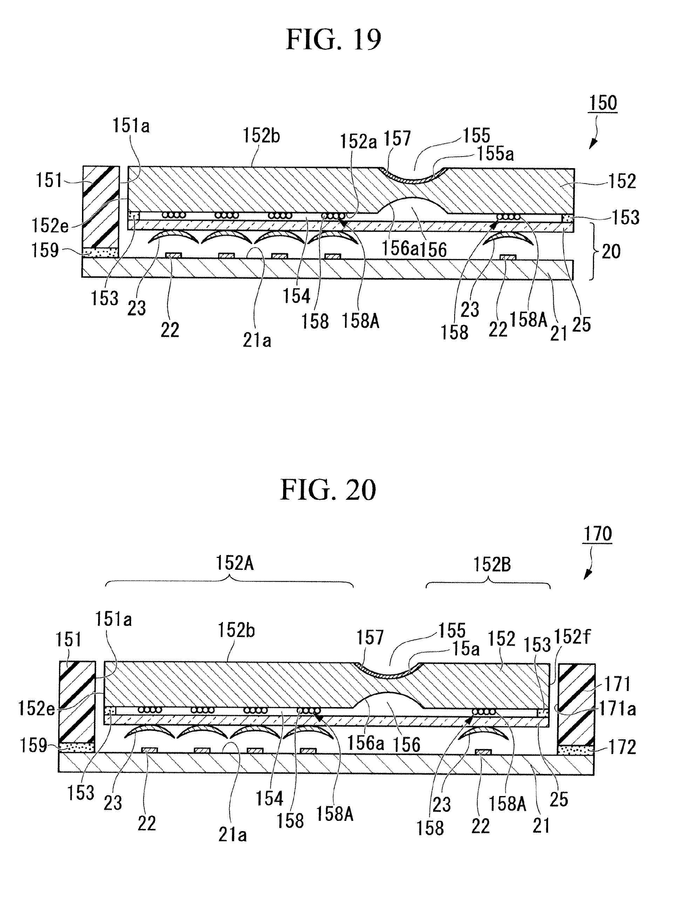

Next, as shown in FIG. 19, the light source 151 is disposed close to a first end 152e of the first light guide region 152A of the light guide 152, and the light source 151 is fixed onto the surface 21a of the board 21 by a solder 159.

Because of this, the light guide 150 is obtained.

According to the sheet switch module manufacturing method, in the colored layer forming step, the colored layer 157 is formed on the surface 152b of the light guide 152 which forms a planar surface by the printing of a coating material having a light shielding property, or the attachment of a light shielding sheet.

In the groove forming step, the surface 152b of the light guide 152 and the colored layer 157 provided on the surface 152b are pressed in the thickness direction (-Z direction) of the light guide 152 by the hot press molding method in which the mold 160 is used.

Because of this, it is possible to form the first groove 155 on the surface 152b of the light guide 152, and to provide the colored layer 157 along the inner surface 155a of the first groove 155.

Therefore, it is possible to form the colored layer 157 more accurately and easily, and to further shorten the processing time together with an improvement in the yield ratio, than the case in which the first groove 155 is previously formed in the light guide 152 and the colored layer 157 is formed on the inner surface thereof.

In addition, since the colored layer 157 is pressed against the surface 152b of the light guide 152 by the hot press molding method, the colored layer 157 is firmly attached to the inner surface 155a of the first groove 155.

In addition, in the groove forming step, the first groove 155 is formed on the surface 152b of the light guide 152 and the second groove 156 is formed on the back 152a of the light guide 152, by the hot press molding method in which the mold 160 is used as mentioned above.

Therefore, it is possible to control the widths or depths of the first groove 155 and the second groove 156 more appropriately than the case in which these grooves are formed by laser processing.

In addition, according to the sheet switch module manufacturing method, a large-scale device that performs laser processing is unnecessary, and the processing time can be made shorter than that in the laser processing, thereby allowing the manufacturing costs to be reduced.

Furthermore, since the grooves (the first groove 155 and the second groove 156) are formed on both sides of the light guide 152, it is possible to make the depths of the first groove 155 and the second groove 156 smaller than the case in which the groove is formed on one surface of the light guide, whereby the adjustment of the mold 160 or the processing of the groove is facilitated.

### <Tenth Embodiment>

FIG. 20 is a schematic cross-sectional view showing the sheet switch module according to a tenth embodiment of the present invention.

In FIG. 20, the same components as those of the sheet switch module 153 shown in FIG. 13B are denoted by the same reference signs, and the description thereof will be omitted.

The point in which a sheet switch module 170 of the present embodiment is different from the sheet switch module 150 of the above-mentioned ninth embodiment is in that a second light source 171 is disposed on the second end-face (end-face of the second light guide region 152B) 152f side of the light guide 152, and an emission surface 171 a of the second light source 171 and the second end-face 152f of the light guide 152 are disposed close to each other.

As the second light source 171, the same light source as the above-mentioned light source 151 is used.

In addition, the second light source 171 is provided on the surface 21a of the board 21 using a solder 172.

In the sheet switch module 170, the light guide 152 is divided into the first light guide region 152A and the second light guide region 152B.

The first groove 155 and the second groove 156 are provided between these two regions.

Furthermore, the sheet switch module 170 includes the light source 151 corresponding to the first light guide region 152A, and the second light source 171 corresponding to the second light guide region 152B.

Therefore, the same effect as that in the above-mentioned sheet switch module 150 is obtained.

At the same time, in the second light guide region 152B of the light guide 152, when the emission light of the second light source 171 is incident on the surface 152f of the light guide 152, it is possible to light up the light extraction portion 158 provided in the second light guide region 152B using the incident light.

In addition, a portion or the entirety of the light which is emitted from the second light source 171 and propagates through the inside of the second light guide region 152B of the light guide 152 is emitted from the first groove 155 to the colored layer 157 side.

When a portion of the light is emitted from the first groove 155 to the colored layer 157 side, the light is absorbed into the colored layer 157, and thus it is possible to prevent the light from being emitted to the outside.

Because of this, it is possible to prevent the first groove 155 which is not required to emit light from emitting light.

In addition, when the remaining light is reflected in the interface (inner surface 155a of the first groove 155) between the first groove 155 and the external space, the light propagates from the second light guide region 152B to the first light guide region 152A.

Therefore, it is possible to light up the light extraction portion 158 provided in the first light guide region 152A.

In this case, the amount of the light reflected in the interface between the first groove 155 and the external space is reduced further than the amount of the emission light from the second light source 171. Therefore, in the first light guide region 152A and the second light guide region 152B, the amounts of the propagating light are different from each other, and the brightnesses of the regions lit up by the light are also different from each other.

Similarly, a portion or the entirety of the light propagating through the inside of the second light guide region 152B of the light guide 152 is emitted from the second groove 156 to the outside.

When a portion of the light is emitted from the second groove 156 to the outside and the remaining light is reflected in the interface (inner surface 156a of the second groove 156) between the second groove 156 and the external space, the reflected light propagates from the second light guide region 152B to the first light guide region 152A.

Therefore, it is possible to light up the light extraction portion 158 provided in the second light guide region 152B.

In this case, the amount of the light reflected in the interface between the second groove 156 and the external space is reduced further than the emission light from the second light source 171. Therefore, in the first light guide region 152A and the second light guide region 152B, the amounts of the propagating light are different from each other, and the brightnesses of the regions lit up by the light are also different from each other.

In addition, when the entirety of the light propagating through the inside of the second light guide region 152B of the light guide 152 from the second groove 156 is emitted to the outside, there is no case in which the light extraction portion 158 provided in the first light guide region 152A is lit up the emission light from the second light source 171.

From the above, gradation is added to the brightness of the light extraction portion 158 provided in the first light guide region 152A and the light extraction portion 158 provided in the second light guide region 152B by one second light source 171, and thus it is possible to light up the light extraction portion 158 provided in each of the regions.

Furthermore, it is possible to multi-color the light extraction portion 158 provided in the first light guide region 152A and the light extraction portion 158 provided in the second light guide region 152B by using both the light source 151 and the second light source 171.

According to the above-mentioned embodiment of the present invention, when a portion of the light propagating through the inside of the first light guide region which is in close proximity to the light source of the light guide is emitted to the outside and the remaining light is reflected in the interface between the groove and the external space, the reflected light propagates from the first light guide region to the second light guide region which is adjacent thereto.

Therefore, it is possible to light up the light extraction portion provided in the second light guide region as well as the first light guide region.

The amount of the light reflected in the interface between the groove and the external space is reduced further than the emission light from the light source.

Therefore, in the first light guide region and the second light guide region, the amounts of the propagating light are different from each other, and the brightnesses of each of the regions are also different from each other.

That is, gradation is added to the brightness of the light extraction portion provided in the first light guide region and the light extraction portion provided in the second light guide region by one light source, and thus it is possible to light up the light extraction portion provided in each of the regions.

According to the sheet switch module of the above-mentioned embodiment of the present invention, the light guide is constituted by the first light guide and the second light guide which are disposed at a predetermined distance so that each of the inclined planes faces each other.

The angle between the inclined plane of the first light guide and the inclined plane of the second light guide, and the surface of the sheet switch is an acute angle.

The light shielding sheet is disposed on the surface of the light guide so as to cover the inclined plane of the first light guide and the inclined plane of the second light guide.

Therefore, it is possible to prevent the light which propagates through the inside of the first light guide and is emitted from the inclined plane thereof from being incident on the inclined plane of the second light guide, and to prevent (shield) the light which propagates through the inside of the first light guide and is emitted from the inclined plane thereof from leaking to the outside of the sheet switch module.

Therefore, when the emission light from the light source is incident on the first end-face of the first light guide, it is possible to light up only the light extraction portion provided in the first light guide using the incident light.

According to the sheet switch module of the present invention, the light guide is divided into the first light guide on the side close to the light source and the second light guide on the side away from the light source with the groove interposed therebetween.

The inner side of the groove on the light source side and the inner side thereof on the side away from the light source are all formed as an inclined plane of which the bottom side of the groove is narrowed and the opening side thereof is widened.

The angle between the inclined plane of the first light guide and the inclined plane of the second light guide, and the surface of the sheet switch facing the light guide is an acute angle.

The light shielding sheet is disposed on the surface of the light guide so as to cover the inclined plane first light guide and the inclined plane of the second light guide.

Therefore, it is possible to prevent the light which propagates through the inside of the first light guide and is emitted from the inclined plane thereof from being incident on the inclined plane of the second light guide.

At the same time, it is possible to prevent (shield) the light which propagates through the inside of the first light guide and is emitted from the inclined plane thereof from leaking to the outside of the sheet switch module.

Therefore, when the emission light from the light source is incident on the first end-face of the first light guide, it is possible to light up only the light extraction portion provided in the first light guide using the incident light.

According to the sheet switch module of the present invention, the angle between the inclined plane of the light guide and the surface of the sheet switch is an acute angle.

The light shielding sheet is disposed so as to cover a portion of the surface of the light guide and the entirety of the inclined plane of the light guide.

Therefore, it is possible to prevent (shield) the light which propagates through the inside of the light guide and is emitted from the inclined plane of the light guide from leaking from the upper surface (the other surface) of the light guide to the outside of the sheet switch module.

At the same time, it is possible to cause the light propagating through the inside of the light guide not to be reflected in the inclined plane and returned to the light guide.

Therefore, it is possible to sufficiently light up only the light extraction portion without lighting up the portion other than the light extraction portion by the light propagating through the inside of the light guide.

As stated above, the embodiments related to the sheet switch module of the present invention have been described, but the sheet switch module is not limited only thereto.

Various modifications are possible on the based on the above-mentioned embodiments.

For example, it is possible to further form the adhesive material 81 below the second groove 156 in the sheet switch modules 150 and 170.

In addition, it is possible to further form the adhesive material 81 below the groove 143 in the sheet switch module 140.

Furthermore, the position of the groove in the Y direction is not limited only to the embodiments shown in the drawings, and the position of the groove can also be adjusted in accordance with the placement of a key or a button attempted to be illuminated.

For example, it is also possible to form the groove in the center of the light guide in the Y direction.

Additionally, for example, it is also possible to form the groove in a position adjacent to the first end-face of the light guide.

### INDUSTRIAL APPLICABILITY

The sheet switch module according to the present invention can be widely applied to an illumination device which selectively lights up (or does not light up) a specific operation key.

Moreover, the sheet switch module of the present invention can be widely applied to an illumination device capable of being expected to sufficiently prevent light from leaking to the outside.

### DESCRIPTION OF THE REFERENCE SYMBOLS

10: SHEET SWITCH MODULE
11: LIGHT SOURCE
12: LIGHT GUIDE
12A: FIRST LIGHT GUIDE REGION
12B: SECOND LIGHT GUIDE REGION
13: ADHESIVE MATERIAL
14: GAP
15, 61: GROOVE
16: LIGHT EXTRACTION PORTION
16A: UNEVEN PORTION
20: SHEET SWITCH
21: BOARD
22: CONTACT PORTION
23: METAL PLATE
24: ADHESIVE LAYER
25: PRESS SHEET
26: CONTACT PORTION
29: SOLDER
30: SWITCH ELEMENT
41: COLORED LAYER
51: LIGHT SHIELDING SHEET
71: SECOND LIGHT SOURCE
112,142,152: LIGHT GUIDE
112A, 142A, 152A: FIRST LIGHT GUIDE REGION
112B, 142B, 152B: SECOND LIGHT GUIDE REGION
113: LIGHT SHIELDING SHEET
114: FIRST ADHESIVE MATERIAL
115, 145, 154: GAP
116: SECOND ADHESIVE MATERIAL
118,146,156: LIGHT EXTRACTION PORTION
118A, 146A, 156A: UNEVEN PORTION
119: SOLDER
151: LIGHT SOURCE
153: ADHESIVE MATERIAL
159, 172: SOLDER
157: COLORED LAYER
155: FIRST GROOVE
156: SECOND GROOVE

## Claims

1. A sheet switch module comprising:
a light source;
a light guide that guides light from the light source;
a sheet switch disposed on the back side of the light guide in a thickness direction of the light guide; and
a groove formed in the thickness direction of the light guide in at least one of a surface and the back of the light guide.

2. The sheet switch module according to claim 1, wherein a colored layer is formed on a surface of the groove.

3. The sheet switch module according to claim 1 or 2, wherein an adhesive material is formed in a position corresponding to the groove, on the back of the light guide.

4. The sheet switch module according to any one of claims 1 to 3, wherein a light shielding sheet that covers the groove is formed on the surface of the light guide.

5. The sheet switch module according to any one of claims 1 to 4, wherein a groove formed in the thickness direction is formed on the surface and the back of the light guide, and
a colored layer is formed on the surface of at least one groove.

6. The sheet switch module according to any one of claims 1 to 5, wherein the light guide includes a first light guide region and a second light guide region, and
the groove is formed between the first light guide region and the second light guide region.

7. The sheet switch module according to any one of claims 1 to 6, wherein the groove has a semi-circular or trapezoidal cross-sectional shape in the thickness direction of the light guide.

8. The sheet switch module according to any one of claims 1 to 7, wherein the groove penetrates through in the thickness direction of the light guide.

9. The sheet switch module according to any one of claims 1 to 8, wherein a width of the groove in the surface of the light guide is larger than a width of the groove in the back of the light guide.

10. The sheet switch module according to any one of claims 1 to 9, wherein the light guide includes a first end-face on which light from the light source is incident, and a second end-face which is a surface opposite to the first end-face, and
the sheet switch module further comprises a second light source that causes light to be incident on the second end-face of the light guide.

11. The sheet switch module according to any one of claims 1 to 10, wherein a depth of the groove in the thickness direction is 70% or more of a thickness of the light guide in the thickness direction.

12. The sheet switch module according to any one of claims 1 to 11, wherein uneven portion is formed on the surface or the back of the light guide.

13. A sheet switch module manufacturing method, comprising:
a colored layer forming step of forming a colored layer on at least one surface of a light guide; and
a groove forming step of using a mold having at least one protruding portion which protrudes in a thickness direction to hot-press the mold from both sides of the light guide by causing positions of the colored layer and the protruding portion to correspond to each other, to simultaneously form a groove and a colored layer on at least one surface of the light guide.
